# EUROPEAN PATENT APPLICATION

(11) **EP 4 231 209 A1**
(43) Date of publication of application: **23.08.2023**
(21) Application number: 20963136.5
(22) Date of filing: 30.11.2020
(51) Int. Cl.: G06N 20/00

(54) **FEDERATED LEARNING METHOD, DEVICE AND SYSTEM**

(71) Applicant: Huawei Technologies Co., Ltd., Shenzhen, Guangdong 518129 (CN)
(72) Inventor: WANG, Chujie, Shenzhen, Guangdong 518129 (CN); QIN, Dongrun, Shenzhen, Guangdong 518129 (CN); YU, Yijun, Shenzhen, Guangdong 518129 (CN)
(74) Representative: Körber, Martin Hans
(86) International application number: PCT/CN2020/132991
(87) International publication number: WO 2022/110248

(57) **Abstract**

A federated learning method, apparatus, and system are disclosed, and relate to the field of artificial intelligence. A first node obtains data distribution information of a plurality of second nodes based on a target data feature required by a training task, where data distribution information of any second node indicates a data class to which service data that is locally stored in the second node and that satisfies the target data feature belongs; the first node selects at least two target second nodes from the plurality of second nodes based on a target data class required by the training task and the data distribution information of the plurality of second nodes, where any target second node locally stores target service data that satisfies the target data feature and that belongs to the target data class; and the first node indicates the at least two target second nodes to perform federated learning, to obtain a federated learning model that is in the training task and that corresponds to the target data class. In this way, when participants have a plurality of data distributions, a trained model is prevented, as much as possible, from being affected by data poisoning.

## Description

### TECHNICAL FIELD

This application relates to the field of data processing technologies, and in particular, to a federated learning method, apparatus, and system.

### BACKGROUND

Federated learning (federated learning) is an emerging artificial intelligence (artificial intelligence, AI) basic technology. It is designed to implement efficient machine learning (machine learning, ML) among a plurality of participants or computing nodes while ensuring information security during big data exchange, protecting terminal data and personal data privacy, and ensuring compliance of local laws and regulations. Machine learning algorithms that can be used for the federated learning are not limited to important algorithms such as a neural network and a random forest, and are expected to become a basis of a collaborative algorithm and a collaborative network of nextgeneration artificial intelligence.

Horizontal federated learning is a key branch of the federated learning. A system architecture of the horizontal federated learning includes one coordinator node and several participant nodes. The coordinator node sends an initial AI model to each participant node. Each participant node trains the AI model by using its own dataset, and sends a model parameter/model gradient value update result obtained through training to the coordinator node. Then, the coordinator node performs aggregation processing on the model parameter/model gradient value update result received from each participant node (for example, performs an aggregation operation on an updated model parameter/model gradient value by using a federated averaging algorithm), and returns an updated model obtained through aggregation processing to each participant node. This process will be repeated until the model converges or a preset iteration stop condition is satisfied. In this architecture, the original dataset of the participant node never leaves its local place. This can protect user privacy and data security, and can further reduce communication overheads caused by sending of the original dataset.

However, in an actual situation, sizes of datasets of the participant nodes may be unbalanced. In addition, distributions of datasets of different participant nodes usually differ greatly. For example, distributions of datasets of some participant nodes may be simple; and some other participant nodes may have data subsets having a plurality of distributions, and the distributions of the datasets differ greatly. Therefore, when different participant nodes train a same AI model by using datasets having different distributions, the AI model is easily affected by data poisoning, and consequently, precision of an aggregated and updated model is reduced.

Therefore, how to ensure precision of a federated learning model is still a problem to be urgently resolved.

### SUMMARY

This application provides a federated learning method, apparatus, and system, to help ensure precision of a federated learning model.

According to a first aspect, an embodiment of this application provides a federated learning method. The method may be applied to a federated learning system including a first node and a plurality of second nodes, and may be implemented by the first node serving as a coordinator.

In the method, the first node obtains data distribution information of the plurality of second nodes based on a target data feature required by a training task, where data distribution information of any second node indicates a data class to which service data that is locally stored in the second node and that satisfies the target data feature belongs; the first node selects at least two target second nodes from the plurality of second nodes based on a target data class required by the training task and the data distribution information of the plurality of second nodes, where any target second node locally stores target service data that satisfies the target data feature and that belongs to the target data class; and the first node indicates the at least two target second nodes to perform federated learning, to obtain a federated learning model that is in the training task and that corresponds to the target data class.

In this solution, the first node may selectively indicate, based on the respective data distribution information of the plurality of second nodes, the at least two target second nodes in the plurality of second nodes to perform federated learning, to obtain the federated learning model corresponding to the target data feature, so as to separately obtain corresponding federated learning models for different data distributions. Therefore, poisoning impact caused by different data distributions of different participant nodes to the model is avoided as much as possible, and precision of the obtained federated learning model is ensured.

It may be understood that, in this embodiment of this application, a data class is classification of service data locally stored on the second node side. The target data feature may be a group of data features (or referred to as a data feature group, including a plurality of data features). After identifying and classifying service data that satisfies the target data feature, the second node may obtain a data subset that separately belongs to at least one data class, where each data class corresponds to one data distribution. A data subset corresponding to each data class is a dataset corresponding to the data distribution, and may be used for testing and evaluating an AI model of the corresponding data class. For example, the target data feature may include a combination of a plurality of data features such as a height, a weight, a chest circumference, and a hip circumference. After service data is identified and classified based on the target data feature, for example, a data class that may be obtained may be classification of body classes such as thin, plump, fat, and overweight, where "thin", "plump", "fat", and "overweight" are one data class, and corresponds to one data distribution.

In a possible design, at least one data analysis model is deployed in each second node, and each data analysis model corresponds to one data feature group and identifies a data class of service data that satisfies the corresponding data feature group; and that the first node obtains data distribution information of a plurality of second nodes based on a target data feature required by a training task includes: The first node sends a first query message to each of the plurality of second nodes based on the target data feature, where the first query message sent to any second node includes an identifier of the target data feature and an identifier of a target data analysis model, and the target data analysis model corresponds to the target data feature; and the first node separately receives the corresponding data distribution information from the plurality of second nodes, where data distribution information of any second node indicates an identifier of at least one data class and data information of service data that is stored in the second node and that separately belongs to the at least one data class.

According to this solution, the at least one data analysis model may be separately deployed in the plurality of second nodes, to identify and classify, by using the at least one data analysis model, service data that is locally stored in any second node and that satisfies corresponding data feature, so as to obtain the data distribution information of the second node. It may be understood that, in this embodiment of this application, a local dataset on the second node side may be analyzed by using the data analysis model, but no limitation is imposed on a specific implementation of obtaining the data distribution information of the second node. In another embodiment, the first node may obtain data distribution information of any one of the plurality of second nodes in any proper manner. This is not limited in this application.

In a possible design, the first query message sent by the first node to any second node further includes an identifier of the target data class, and the data distribution information fed back by the second node includes the identifier of the target data class and data information of the target service data that is stored in the second node and that belongs to the target data class.

According to this solution, the first node may indicate the target data class to any second node, so that the second node feeds back the data information of the target service data that is locally stored in the second node and that belongs to the target data class. In this way, the first node selects, based on feedback of the plurality of second nodes, a federated learning process suitable for participating in an AI model corresponding to the target data class, to obtain the federated learning model corresponding to the target data class.

In a possible design, before that the first node obtains data distribution information of a plurality of second nodes based on a target data feature required by a training task, the method further includes: The first node sends a data analysis model deployment message to each of the plurality of second nodes, where the data analysis model deployment message sent to any second node includes an identifier of the at least one data analysis model and a model file of the at least one data analysis model.

According to this solution, the first node may separately deploy the at least one data analysis model in the plurality of second nodes by adding the data analysis model deployment messages between the first node and the plurality of second nodes, and may further obtain the data distribution information of each second node by using the data analysis model deployed in the second node.

In a possible design, that the first node indicates the at least two target second nodes to perform federated learning, to obtain a federated learning model that is in the training task and that corresponds to the target data class includes: The first node sends a model training message to each of the at least two target second nodes, where the model training message sent to any target second node includes an identifier of a target artificial intelligence AI model, and the target AI model corresponds to the target data class; and the first node obtains, based on updated AI models respectively received from the at least two target second nodes, the federated learning model that is in the training task and that corresponds to the target data class.

According to this solution, the first node may select, from the plurality of second nodes based on the data distribution information of the plurality of second nodes, the at least two target second nodes that can participate in the federated learning process of the federated learning model corresponding to the target data class, and include the identifier of the target AI model in the model training message sent to each of the at least two target second nodes, to indicate the at least two target second nodes to train, based on the indication, the target AI model by using the stored target service data, to obtain the updated AI models. Then, the operation is repeatedly performed until the model converges or a preset iteration stop condition is satisfied, to obtain the federated learning model corresponding to the target data class. Because the federated learning model is obtained through training by using datasets having a same data distribution, data poisoning impact can be avoided, and precision of the federated learning model can be ensured.

In a possible design, the model training message sent to any target second node further includes the identifier of the target data class and the identifier of the target data analysis model.

According to this solution, the first node may include the identifier of the target data class and the identifier of the target data analysis model in the model training message sent to any target second node, to indicate the target second node to perform federated learning by using training data in the stored target service data, so as to obtain the updated AI model. In this way, the correct training data is used for model training, to avoid data poisoning impact and ensure precision of the aggregated federated learning model.

In a possible design, that the first node indicates the at least two target second nodes to perform federated learning, to obtain a federated learning model that is in the training task and that corresponds to the target data class further includes: The first node sends a model evaluation message to each of the at least two target second nodes, where the model evaluation message sent to any target second node includes an identifier and an evaluation indicator of a target evaluation model, and the target evaluation model corresponds to the target data class; and the first node separately receives corresponding model evaluation results from the at least two target second nodes.

According to this solution, the first node may include the identifier of the target evaluation model in the model evaluation message sent to the target second node, so that the target second node may perform model evaluation by using test data in the stored target service data. In this way, the correct test data is used for model evaluation, avoiding inaccurate model evaluation.

In a possible design, the model evaluation message sent to any target second node further includes the identifier of the target data class and the identifier of the target data analysis model.

According to this solution, the first node may include the identifier of the target data class and the identifier of the target data analysis model in the model evaluation message sent to the target second node, so that the target second node may perform model evaluation by using the test data in the stored target service data. In this way, the correct test data is used for model evaluation, avoiding inaccurate model evaluation.

In a possible design, the federated learning system is a wireless AI model-driven network system; the first node includes a model management function MMF module; and any second node includes a model training function MTF module, a data management function DMF module, and a model evaluation function MEF module, where the at least one data analysis model is deployed in the DMF module or the MTF module; and that the first node sends a first query message to each second node based on the target data feature includes: The MMF module sends the first query message to the DMF module or the MTF module of each second node.

According to this solution, when the federated learning system is implemented as the wireless AI model-driven network system, the MMF module of the first node may separately communicate with the corresponding functional modules of the second node, and include related indication information in each sent message, so that when the functional module corresponding to the second node implements a function of the functional module to complete federated learning, correct data can be used, so as to avoid data poisoning impact and ensure precision of a federated learning model corresponding to each data class.

In a possible design, the method further includes: The first node sends a mapping relationship table to each of the plurality of second nodes, where the mapping relationship table sent to any second node is used for recording a mapping relationship between an identifier of a data feature, an identifier of an AI model, an identifier of a data analysis model, and an identifier of a data class.

According to this solution, the first node may send the mapping relationship table to the second node, so that when subsequently indicating the corresponding second node to perform federated learning, an identifier of a required target data class or an identifier of a target data analysis model may not be specified in a sent related message. When a model training message needs to be frequently delivered to perform model iteration, a quantity of messages transmitted between communication interfaces can be effectively reduced, so as to reduce signaling overheads.

According to a second aspect, an embodiment of this application provides a federated learning method. The method may be applied to any second node in a federated learning system including a first node and a plurality of second nodes.

In the method, the second node receives a first query message from the first node, where the first query message indicates a target data feature required by a training task; the second node sends data distribution information to the first node based on the target data feature, where the data distribution information indicates a data class to which service data that is locally stored in the second node and that satisfies the target data feature belongs; training, by the second node as indicated by the first node and by using stored target service data that belongs to a target data class, a target artificial intelligence AI model corresponding to the target data class, to obtain an updated AI model; and the second node sends the updated AI model to the first node, so that the first node obtains a federated learning model that is in the training task and that corresponds to the target data class.

In a possible design, at least one data analysis model is deployed in the second node, and each data analysis model corresponds to one data feature group and identifies a data class of service data that satisfies the corresponding data feature group; and the first query message includes an identifier of the target data feature and an identifier of a target data analysis model, and the target data analysis model corresponds to the target data feature; and that the second node sends data distribution information to the first node based on the target data feature includes: The second node identifies, by using the target data analysis model, the data class of the stored service data that satisfies the target data feature, and obtains data information of service data that separately belongs to at least one data class; and the second node sends the data distribution information to the first node, where the data distribution information indicates an identifier of the at least one data class and the data information of the service data that separately belongs to the at least one data class.

In a possible design, the first query message further includes an identifier of the target data class, and the data distribution information includes the identifier of the target data class and data information of the target service data that is stored in the second node and that belongs to the target data class.

In a possible design, before that the second node receives a first query message from the first node, the method further includes: The second node receives a data analysis model deployment message from the first node, where the data analysis model deployment message includes an identifier of the at least one data analysis model and a model file of the at least one data analysis model.

In a possible design, the training, by the second node as indicated by the first node by using stored target service data that belongs to the target data class, a target artificial intelligence AI model corresponding to the target data class, to obtain an updated AI model includes: receiving, by the second node, a model training message from the first node, where the model training message includes an identifier of the target AI model, and the target AI model corresponds to the target data class; obtaining, by the second node based on the identifier of the AI model, stored target service data that satisfies the target data feature and that belongs to the target data class; and training, by the second node, the AI model based on the target service data, to obtain an updated AI model.

In a possible design, the model training message further includes the identifier of the target data class and the identifier of the target data analysis model.

In a possible design, the method further includes: The second node receives a model evaluation message from the first node, and evaluates a target evaluation model by using the target service data, where the target evaluation model message includes an identifier and an evaluation indicator of the target evaluation model, and the target evaluation model corresponds to the target data class; and the second node sends a model evaluation result to the first node.

In a possible design, the model evaluation message further includes the identifier of the target data class and the identifier of the target data analysis model.

In a possible design, the federated learning system is a wireless AI model-driven network system; the first node includes a model management function MMF module; and any second node includes a model training function MTF module, a data management function DMF module, and a model evaluation function MEF module, where the at least one data analysis model is deployed in the DMF module or the MTF module; and that the second node receives a first query message from the first node includes: The DMF module or the MTF module receives the first query message from the MMF module.

In a possible design, when the DMF module and the MTF module are located in different entities, and the at least one data analysis model is deployed in the MTF module, after that the DMF module receives the first query message from the MMF module, the method further includes: The DMF module sends a data analysis message to the MTF module, where the data analysis message includes a full dataset that is stored in the DMF module and that satisfies the target data feature, the identifier of the target data class, and the identifier of the data analysis model; and the data analysis message indicates the MTF module to use the target data analysis model to identify a data class of the full dataset.

In a possible design, when the DMF module and the MTF module are located in different entities, and the at least one data analysis model is deployed in the DMF module, that the second node receives a model training message from the first node includes: The MTF module receives the model training message from the MMF module; and after that the MTF module receives the model training message from the MMF module, the method further includes: The MTF module sends a second query message to the DMF module, where the second query message indicates the DMF module to feed back a training dataset in the target service data to the MTF module, where the second query message includes: the identifier of the target data feature, the identifier of the target AI model, and first data type indication information; or the identifier of the target data feature, the identifier of the target data class, the identifier of the target data analysis model, and first data type indication information.

In a possible design, after the MEF module receives the model evaluation message from the MMF module when the MEF module and the MTF module are located in different entities, the method further includes: The MEF module sends a third query message to the DMF module, where the third query message indicates the DMF module to feed back a test dataset in the target service data to the MEF module, where the third query message includes: the identifier of the target data feature, the identifier of the target AI model, and second data type indication information; or the identifier of the target data feature, the identifier of the target data class, the identifier of the target data analysis model, and second data type indication information.

According to a third aspect, an embodiment of this application provides a federated learning apparatus, used in a federated learning system including a first node and a plurality of second nodes. The apparatus includes: a communication unit, configured to obtain data distribution information of the plurality of second nodes based on a target data feature required by a training task, where data distribution information of any second node indicates a data class to which service data that is locally stored in the second node and that satisfies the target data feature belongs; and a processing unit, configured to: select at least two target second nodes from the plurality of second nodes based on a target data class required by the training task and the data distribution information of the plurality of second nodes; and indicate the at least two target second nodes to perform federated learning, to obtain a federated learning model that is in the training task and that corresponds to the target data class, where any target second node locally stores target service data that satisfies the target data feature and that belongs to the target data class.

In a possible design, at least one data analysis model is deployed in each second node, and each data analysis model corresponds to one data feature group and identifies a data class of service data that satisfies the corresponding data feature group; and the communication unit is configured to: send a first query message to each of the plurality of second nodes based on the target data feature, where the first query message sent to any second node includes an identifier of the target data feature and an identifier of a target data analysis model, and the target data analysis model corresponds to the target data feature; and separately receive the corresponding data distribution information from the plurality of second nodes, where data distribution information of any second node indicates an identifier of at least one data class and data information of service data that is stored in the second node and that separately belongs to the at least one data class.

In a possible design, the first query message sent by the first node to any second node further includes an identifier of the target data class, and the data distribution information fed back by the second node includes the identifier of the target data class and data information of the target service data that is stored in the second node and that belongs to the target data class.

In a possible design, before the first node obtains the data distribution information of the plurality of second nodes based on the target data feature required by the training task, the communication unit is further configured to: send a data analysis model deployment message to each of the plurality of second nodes, where the data analysis model deployment message sent to any second node includes an identifier of the at least one data analysis model and a model file of the at least one data analysis model.

In a possible design, the processing unit is configured to: send a model training message to each of the at least two target second nodes, where the model training message sent to any target second node includes an identifier of a target artificial intelligence AI model, and the target AI model corresponds to the target data class; and obtain, based on updated AI models respectively received from the at least two target second nodes, the federated learning model that is in the training task and that corresponds to the target data class.

In a possible design, the model training message sent to any target second node further includes the identifier of the target data class and the identifier of the target data analysis model.

In a possible design, the communication unit is further configured to: send a model evaluation message to each of the at least two target second nodes, where the model evaluation message sent to any target second node includes an identifier and an evaluation indicator of a target evaluation model, and the target evaluation model corresponds to the target data class; and separately receive corresponding model evaluation results from the at least two target second nodes.

In a possible design, the model evaluation message sent to any target second node further includes the identifier of the target data class and the identifier of the target data analysis model.

In a possible design, the federated learning system is a wireless AI model-driven network system; the first node includes a model management function MMF module; and any second node includes a model training function MTF module, a data management function DMF module, and a model evaluation function MEF module, where the at least one data analysis model is deployed in the DMF module or the MTF module; and that the communication unit sends a first query message to each second node includes: A communication unit of the MMF module sends the first query message to the DMF module or the MTF module of each second node.

In a possible design, the communication unit is further configured to: send a mapping relationship table to each of the plurality of second nodes, where the mapping relationship table sent to any second node is used for recording a mapping relationship between an identifier of a data feature, an identifier of an AI model, an identifier of a data analysis model, and an identifier of a data class.

According to a fourth aspect, an embodiment of this application provides a federated learning apparatus, used in any second node in a federated learning system including a first node and a plurality of second nodes. The apparatus includes: a communication unit, configured to: receive a first query message from the first node, where the first query message indicates a target data feature required by a training task; and send data distribution information to the first node based on the target data feature, where the data distribution information indicates a data class to which service data that is locally stored in the second node and that satisfies the target data feature belongs; and a processing unit, configured to train, as indicated by the first node and by using stored target service data that belongs to a target data class, a target artificial intelligence AI model corresponding to the target data class, to obtain an updated AI model, where the communication unit is further configured to send the updated AI model to the first node, so that the first node obtains a federated learning model that is in the training task and that corresponds to the target data class.

In a possible design, at least one data analysis model is deployed in the second node, and each data analysis model corresponds to one data feature group and identifies a data class of service data that satisfies the corresponding data feature group; and the first query message includes an identifier of the target data feature and an identifier of a target data analysis model, and the target data analysis model corresponds to the target data feature; the processing unit is configured to: identify, by using the target data analysis model, the data class of the stored service data that satisfies the target data feature, and obtain data information of service data that separately belongs to at least one data class; and the communication unit is further configured to send the data distribution information to the first node, where the data distribution information indicates an identifier of the at least one data class and the data information of the service data that separately belongs to the at least one data class.

In a possible design, the first query message further includes an identifier of the target data class, and the data distribution information includes the identifier of the target data class and data information of the target service data that is stored in the second node and that belongs to the target data class.

In a possible design, the communication unit is further configured to: before the first node receives the first query message, receive a data analysis model deployment message from the first node, where the data analysis model deployment message includes an identifier of the at least one data analysis model and a model file of the at least one data analysis model.

In a possible design, the communication unit is configured to receive a model training message from the first node, where the model training message includes an identifier of the target AI model, and the target AI model corresponds to the target data class; and the processing unit is configured to: obtain, based on the identifier of the AI model, stored target service data that satisfies the target data feature and that belongs to the target data class; and train the AI model based on the target service data, to obtain the updated AI model.

In a possible design, the model training message further includes the identifier of the target data class and the identifier of the target data analysis model.

In a possible design, the communication unit is further configured to: receive a model evaluation message from the first node, and evaluate a target evaluation model by using the target service data, where the target evaluation model message includes an identifier and an evaluation indicator of the target evaluation model, and the target evaluation model corresponds to the target data class; and send a model evaluation result to the first node.

In a possible design, the model evaluation message further includes the identifier of the target data class and the identifier of the target data analysis model.

In a possible design, the federated learning system is a wireless AI model-driven network system; the first node includes a model management function MMF module; and any second node includes a model training function MTF module, a data management function DMF module, and a model evaluation function MEF module, where the at least one data analysis model is deployed in the DMF module or the MTF module; and that a communication unit receives a first query message from the first node includes: A communication unit of the DMF module or a communication unit of the MTF module receives the first query message from the MMF module.

In a possible design, when the DMF module and the MTF module are located in different entities, and the at least one data analysis model is deployed in the MTF module, after the communication unit of the DMF module receives the first query message from the MMF module, the communication unit of the DMF module is further configured to: send a data analysis message to the MTF module, where the data analysis message includes a full dataset that is stored in the DMF module and that satisfies the target data feature, the identifier of the target data class, and the identifier of the data analysis model; and the data analysis message indicates the MTF module to use the target data analysis model to identify a data class of the full dataset.

In a possible design, when the DMF module and the MTF module are located in different entities, and the at least one data analysis model is deployed in the DMF module, that the second node receives a model training message from the first node includes: The communication unit of the MTF module receives the model training message from the MMF module; and
after the communication unit of the MTF module receives the model training message from the MMF module, the communication unit of the MTF module is further configured to send a second query message to the DMF module, where the second query message indicates the DMF module to feed back a training dataset in the target service data to the MTF module, where the second query message includes: the identifier of the target data feature, the identifier of the target AI model, and first data type indication information; or the identifier of the target data feature, the identifier of the target data class, the identifier of the target data analysis model, and first data type indication information.

In a possible design, when the MEF module and the MTF module are located in different entities, the communication unit is configured to: receive the model evaluation message from the MMF module by using the communication unit of the MEF module; and after receiving the model evaluation message from the MMF module by using the communication unit of the MEF module, the communication unit of the MEF module is further configured to send a third query message to the DMF module, where the third query message indicates the DMF module to feed back a test dataset in the target service data to the MEF module, where the third query message includes: the identifier of the target data feature, the identifier of the target AI model, and second data type indication information; or the identifier of the target data feature, the identifier of the target data class, the identifier of the target data analysis model, and second data type indication information.

According to a fifth aspect, an embodiment of this application provides a federated learning system, including the federated learning apparatus according to any possible design of the third aspect and the federated learning apparatus according to any possible design of the fourth aspect.

According to a sixth aspect, an embodiment of this application provides a computer-readable storage medium. The computer-readable storage medium stores a computer program. When the computer program runs a computer, the computer is enabled to perform the method according to any possible design of the first aspect or the second aspect.

According to a seventh aspect, an embodiment of this application provides a computer program product. When the computer program product runs on a computer, the computer is enabled to perform the method according to any possible design of the first aspect or the second aspect.

According to an eighth aspect, an embodiment of this application provides a chip. The chip includes a processor and a data interface. The processor reads, through the data interface, instructions stored in a memory, to perform the method according to any possible design of the first aspect or the second aspect.

In a possible design, the chip may further include a memory. The memory stores instructions. The processor is configured to execute the instructions stored in the memory. When the instructions are executed, the processor is configured to perform the method according to any possible design of the first aspect or the second aspect.

### BRIEF DESCRIPTION OF DRAWINGS

FIG. 1 is a schematic diagram of a scenario of federated learning;
FIG. 2 is a schematic diagram of a general process of federated learning;
FIG. 3A and FIG. 3B are schematic diagrams of a wireless AI model-driven network system;
FIG. 4 is a schematic diagram of performing federated learning based on a wireless AI model-driven network system;
FIG. 5 is a schematic diagram of a training principle of a federated learning model according to an embodiment of this application;
FIG. 6A to FIG. 6C are schematic diagrams of system architectures to which embodiments of this application are applicable;
FIG. 7 is a schematic flowchart of a federated learning method according to an embodiment of this application;
FIG. 8A and FIG. 8B are a schematic flowchart of a federated learning method according to an embodiment of this application;
FIG. 9A and FIG. 9B are a schematic flowchart of a federated learning method according to an embodiment of this application;
FIG. 10 is a schematic flowchart of a federated learning method according to an embodiment of this application;
FIG. 11 is a schematic flowchart of a federated learning method according to an embodiment of this application;
FIG. 12 is a schematic flowchart of a federated learning method according to an embodiment of this application;
FIG. 13 is a schematic flowchart of a federated learning method according to an embodiment of this application;
FIG. 14 is a schematic flowchart of a federated learning method according to an embodiment of this application;
FIG. 15 is a schematic diagram of a federated learning apparatus according to an embodiment of this application; and
FIG. 16 is a schematic diagram of a federated learning device according to an embodiment of this application.

### DESCRIPTION OF EMBODIMENTS

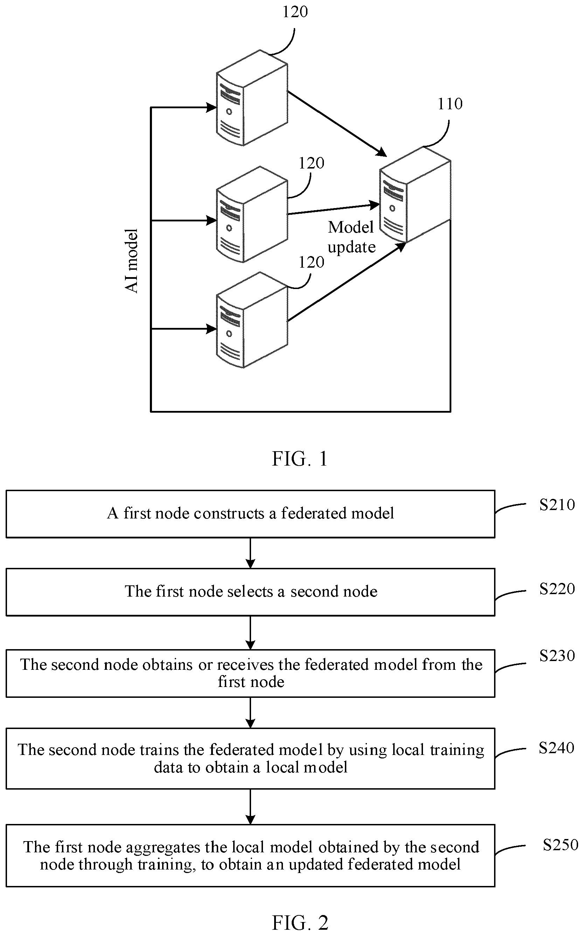

For ease of understanding, a scenario and a process of federated learning are first described by using examples with reference to FIG. 1 and FIG. 2.

Refer to FIG. 1. The federated learning scenario may include a coordinator node and a plurality of participant nodes. The coordinator node is a coordinator in a federated learning process, and the participant node is a participant in the federated learning process and is also an owner of a dataset. For ease of understanding and differentiation, in this embodiment of this application, the coordinator node is referred to as a first node 110, and the participant node is referred to as a second node 120.

Each of the first node 110 and the second node 120 may be any node (for example, a network node) that supports data transmission. For example, the first node may be a server (server), or referred to as a parameter server, or referred to as an aggregation server. The second node may be a client (client), for example, a mobile terminal or a personal computer.

The first node 110 may be configured to maintain a federated learning model. The second node 120 may obtain the federated learning model from the first node 110, and perform local training with reference to a local training dataset, to obtain a local model. After obtaining the local model through training, the second node 120 may send the local model to the first node 110, so that the first node 110 updates or optimizes the federated learning model. In this way, a plurality of rounds of iterations are performed until the federated learning model converges or a preset iteration stop condition is satisfied (for example, a maximum quantity of times is reached or longest training duration is reached).

With reference to FIG. 2, the following describes a general process of federated learning.

S210: A first node 110 constructs a federated learning model. The first node may construct a general machine learning model, or construct a specific machine learning model as required. An image identification task is used as an example. The first node may construct a convolutional neural network (convolutional neural network, CNN) as the federated learning model.

S220: The first node 110 selects a second node 120. The second node 120 selected by the first node 110 obtains the federated learning model delivered by the first node 110. The first node 110 may randomly select the second node 120, or may select the second node 120 according to a particular policy. For example, the first node 110 may select a second node 120 having a large data volume of training data that needs to be used for the federated learning model.

S230: The second node 120 obtains or receives the federated learning model from the first node 110. For example, in an implementation, the second node 120 may actively request the first node 110 to deliver the federated learning model. Alternatively, in another implementation, the first node 110 may actively deliver the federated learning model to the second node. For example, the second node 120 is a client, and the first node 110 is a server. In this case, the client may download the federated learning model from the server.

S240: The second node 120 trains the federated learning model by using local training data, to obtain a local model. The second node 120 may use the federated learning model as an initial model of the local model, and then perform one or more steps of training on the initial model by using the local training data, to obtain the local model.

S250: The first node 110 aggregates the local model obtained by the second node 120 through training, to obtain an updated federated learning model. For example, in an implementation, the first node 110 may perform weighted summation on parameters of local models of a plurality of second nodes 120, and use a result of the weighted summation as the updated federated learning model.

The process described in S220 to S250 may be considered as one round of iteration in the federated learning process. The first node 110 and the second node 120 may repeatedly perform steps S220 to S250 until the federated learning model converges or achieves a preset effect.

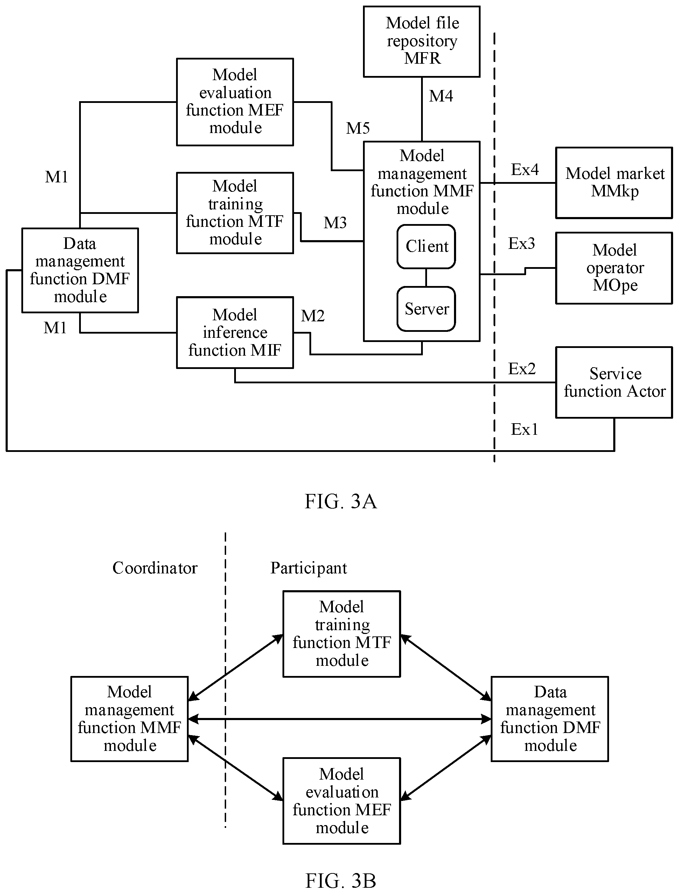

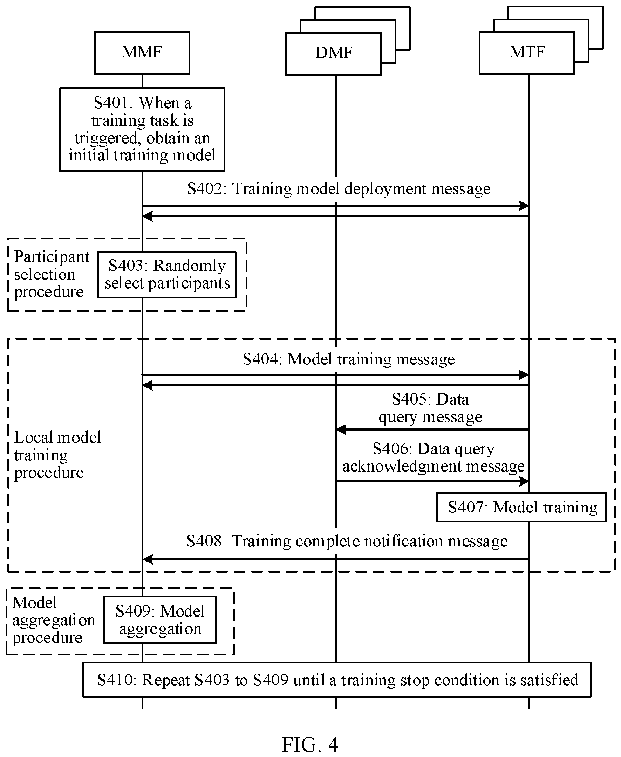

With emergence of artificial intelligence (Artificial Intelligence, AI) technologies, AI helps various industries resolve problems that cannot be resolved by using conventional algorithms. Currently, the AI technologies are also attempted to be introduced to the wireless network field to improve wireless network performance. A wireless AI model-driven network system mainly resolves distribution, update, and coordination problems of an AI algorithm model in a wireless network. With reference to FIG. 3A, FIG. 3B, and FIG. 4, the following describes, by using examples, a scenario and a process of performing federated learning based on a wireless AI model-driven network system.

FIG. 3A shows an example of functional modules that may be included in a wireless AI model-driven network system.

Refer to FIG. 3B. Main functional modules of the wireless AI model-driven network system may include a model management function (model management function, MMF) module, a model training function (model training function, MTF) module, a model evaluation function (model evaluation function, MEF) module, a data management function (data management function, DMF) module, and the like. The MMF module may be configured to manage a model life cycle, and may trigger model training and model evaluation functions. The MTF module may be configured to train a local model, and output a model file after the local model training ends. The MEF module may use a test set to evaluate performance of a trained model. The DMF module may be configured to subscribe to and store a dataset required by a model, and provide related services such as data query and obtaining. The MTF module and the MEF module may respectively initiate data requests to the DMF module to obtain datasets (including a training set and a test set).

The MMF module is a functional module of a coordinator. The MTF module, the MEF module, and the DMF module are functional modules of a participant. When a training task is triggered, the MMF module selects several MTF modules as participants to participate in a model training process. After receiving a model training message, the MTF module queries data from the DMF module based on a data feature name. In addition to the data feature name, a data query message further includes a data type (type), which indicates that a type of the data to be queried for is training data or test data. The DMF module queries a full dataset based on the data feature name and returns a training dataset in the full dataset to the MTF module. The MTF module performs model training by using training data returned by the DMF module, and sends a training complete notification message to the MMF module after the training is completed. After receiving training complete messages from all the MTF modules that participate in the training, the MMF module performs model aggregation processing. The MMF module repeats the foregoing process until a training stop condition is satisfied.

It may be understood that a wireless AI model-driven network system to which embodiments of this application are applicable may further include another module in addition to the main functional modules shown in FIG. 3B. Only the functional modules related to this application are shown herein, and no limitation is imposed on an architecture of the wireless AI model-driven network and a function implementation of the architecture.

Refer to FIG. 4. In a process of performing federated learning based on the architecture of the wireless AI model-driven network, an interaction process between the functional modules shown in FIG. 3B is shown as follows:
S401: When a training task is triggered, the MMF module obtains an initial training model.
S402: The MMF module sends a training model deployment message to registered MTF modules, where the training model deployment message includes a training model name and a training model file, so that each MTF module locally deploys a training model based on the training model deployment message.
S403: The MMF module randomly selects several participants from the registered participants (namely, the MTF modules) to participate in model training.
S404: The MMF module sends a model training message to the MTF module that needs to participate in the model training, where the model training message includes the training model name and the training model file, to trigger the MTF module to start a model training procedure.
S405: The MTF module sends a data query message to the DMF module, where the data query message includes information such as a data feature name (data Name) and a data type indication of data required for the model training.
S406: The DMF module sends a data query acknowledgment message to the MTF module, where the message carries a dataset that satisfies a data query information requirement.
S407: The MTF module performs model training by using the dataset returned by the DMF module, completes the model training after several iterations, and updates the training model file.
S408: The MTF module sends a training complete notification message to the MMF module, where the training complete notification message includes the training model name and the training model file of the local model trained by the MTF module, and a training data volume used for the training.
S409: After collecting training complete notification messages returned by all the MTF modules that participate in the current round of training, the MMF module aggregates, by using an aggregation algorithm (for example, a federated averaging algorithm), local training models uploaded by the MTF modules, to obtain updated model parameters.
S410: The MMF module determines whether a training stop condition is satisfied. If the condition is not satisfied, S403 to S409 are repeated to perform a next round of participant selection and model training procedure, and the current procedure ends when the training stop condition is satisfied. The condition for determining may be, for example, whether a maximum quantity of training times is reached or whether longest training duration is reached.

To ensure horizontal federated learning performance when sizes of datasets of the participants are unbalanced, an improvement is made in the industry for the federated learning process shown in FIG. 4. The improvement specifically includes:
(1) In a participant selection phase in S403, the MMF module sends the data feature name to the DMF module, to query for data information of each participant, and selects, based on the data information fed back by each participant, an appropriate participant to participate in the current round of the model training process.
(2) In the local model training phase, in S408, the MMF module indicates the data volume used by the MTF module to perform local model training.

In deep learning, it is assumed that data is independently distributed. If data having different distributions is used for training a same AI model, the model is vulnerable to data poisoning, resulting in a decrease in model precision after aggregation.

In an actual application, data distributions of different participants usually differ greatly. In the federated learning process shown in FIG. 4, in the participant selection phase in S403, the MMF module randomly selects the participants to participate in the current round of model training, but cannot select participants having a same data distribution. Therefore, the trained model is easily affected by poisoning caused by different data distributions of different participants. In the local model training phase, the MTF module obtains data from the DMF module only by using the data feature name. Therefore, the MTF module can obtain only full data having the data feature and use the full data to perform model training. However, when the full data has a plurality of distributions, the model is affected by data poisoning, a training convergence speed becomes slow, and model performance deteriorates.

However, in the improved solution based on FIG. 4, the MMF module queries the data information from the DMF module only by using the data feature name. Therefore, only full data having the data feature can be found, and information (for example, a data length) about the full data is returned. However, when data has a plurality of distributions, the DMF module cannot distinguish, based on the data name, between the data having the different distributions. Therefore, the MMF module cannot obtain information about each data distribution, and a problem that the MMF module selects participants having different data distributions to train a same model still exists. Similarly, in the local model training phase, the MTF module can obtain data from the DMF module only by using the data feature name. Therefore, only full data having the data feature can be obtained, and model training is performed by using the full data. When there are a plurality of distributions in the full data, problems such as a slow training convergence speed and model performance deterioration caused by data poisoning to the model cannot be avoided.

In view of this, embodiments of this application provide a federated learning solution, to help ensure precision of a federated learning model. In this solution, a method and an apparatus are based on a same technical concept. Because principles for resolving a problem by using the method and the apparatus are similar, mutual reference may be made between implementations of the apparatus and the method, and repeated descriptions are not provided again.

The solution may be applied to a federated learning system including a first node and a plurality of second nodes. When a training task is triggered, the first node serving as a coordinator may determine a target data feature and a target data class based on the training task. The first node obtains data distribution information of the plurality of second nodes based on the target data feature. Data distribution information of any second node indicates a data class to which service data that is locally stored in the second node and that satisfies the target data feature belongs. Then, the first node may select at least two target second nodes from the plurality of second nodes based on the target data class and the data distribution information of the plurality of second nodes, and indicate the at least two target second nodes to perform federated learning, to obtain a federated learning model that is in the training task and that corresponds to the target data class.

The data distribution information fed back by the second node may be one of decision bases. The first node may select, from the plurality of second nodes based on the data distribution information of the plurality of second nodes, the at least two target second nodes storing service data that satisfies the target data feature and that belongs to the target data class, so that the at least two target second nodes participate in a model training process of the federated learning model corresponding to the target data class, so as to obtain the federated learning model of the corresponding target data class. In addition, in a process in which the first node coordinates the at least two target second nodes to train the federated learning model corresponding to the target data class, the first node may include related indication information in a related message sent to any target second node, to indicate each target second node to select target service data belonging to the target data class to train or evaluate a corresponding AI model, so as to obtain the federated learning model corresponding to the target data class.

According to this solution, a data class to which service data that satisfies the target data feature belongs may be identified. Each data class corresponds to one data distribution. For each data class, corresponding target service data is used for completing model training or model evaluation. Therefore, when each participant has a plurality of data distributions, corresponding federated learning models are obtained for the different data distributions, to avoid, as much as possible, poisoning impact caused by different data distributions of different participant nodes to the federated learning model, and ensure precision of the obtained federated learning model.

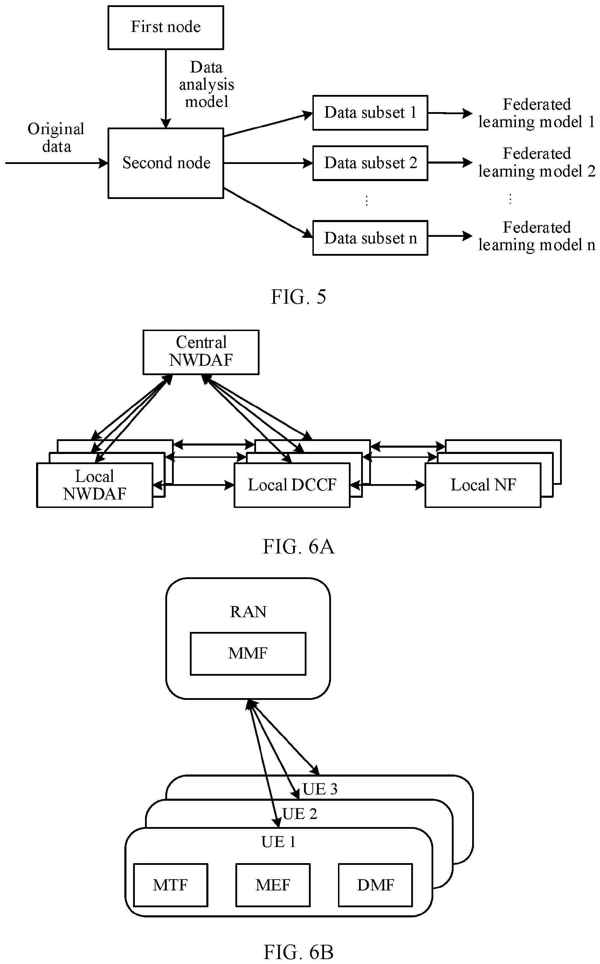

For ease of understanding, the following describes a principle of the federated learning solution in this application with reference to FIG. 5.

Refer to FIG. 5. When a training task is triggered, a first node serving as a coordinator may deliver at least one data analysis model to a plurality of second nodes. Each data analysis model may be a clustering or classification model. Each data analysis model corresponds to one data feature group and may be used for identifying a data class of service data that satisfies the corresponding data feature, so that a full dataset that satisfies the corresponding data feature is divided into data subsets that separately belong to at least one data class. A data subset of each data class may be used for performing model training or model evaluation on an AI model corresponding to the data class. The at least one data analysis model may be provided by a model provider, may be stored in the first node, or may be obtained by the first node from a server (or another storage node) of the model provider. This is not limited in this application.

The second node may locally deploy the at least one data analysis model as indicated by the first node. Further, original local data is identified, analyzed, and classified by using the at least one data analysis model, so as to identify different data classes of the service data that satisfies the corresponding data feature, and obtain data subsets respectively corresponding to the different data classes. Each data class corresponds to one data distribution.

For each data class, the first node may lead at least two second nodes that store service data belonging to the data class as participant nodes, and indicate each participant node to use the locally stored service data of the corresponding data class to train and evaluate an AI model corresponding to the data class, so as to obtain a federated learning model corresponding to the data class.

The first node may include parameter information, for example, an identifier of the target data class and an identifier of a target data analysis model, in a data information query message sent to each of the plurality of second nodes, to indicate each second node to identify and classify locally stored data based on the indication, and feed back corresponding data distribution information, so that the first node selects at least two target second nodes from the plurality of second nodes based on the data distribution information fed back by the plurality of second nodes, so that the at least two target second nodes participate in a training process of an AI model corresponding to the target data class.

Further, when indicating the at least two target second nodes to train the AI model corresponding to the target data class, the first node may include the parameter information, for example, the identifier of the target data class and the identifier of the target data analysis model, in a model training message or a model evaluation message sent to any one of the at least two target second nodes, to indicate each target second node to perform model training or model evaluation by using target service data corresponding to the target data class, so as to obtain a federated learning model corresponding to the target data class. In this way, a problem that precision of an aggregated model is reduced because different participants use data having different distributions to train a same AI model can be resolved.

It may be understood that, in this embodiment of this application, data identification and analysis may be implemented by using the data analysis model, but no limitation is imposed on a specific implementation of the data analysis model. In another embodiment, the first node may learn of a data distribution status on the second node side in another manner, and lead training and evaluation processes of federated learning models corresponding to different data classes. Details are not described herein again.

Before embodiments of this application are described in detail, a system architecture in embodiments of this application is first described.

In an optional implementation, embodiments of this application are applicable to the federated learning system shown in FIG. 1.

In an optional implementation, embodiments of this application are applicable to the wireless AI model-driven network system shown in FIG. 3A and FIG. 3B. In addition, when embodiments of this application are applied to different scenarios, the functional modules included in the wireless AI model-driven network system may have different specific implementations. The following provides examples for description with reference to FIG. 6A to FIG. 6C.

### Example 1:

In an example: Refer to FIG. 6A. Embodiments of this application may be applied to a horizontal federated learning scenario in an enablers for network automation (enablers for Network Automation, eNA) architecture. eNA is a new intelligent network architecture based on a network data analytics function (network data analytics function, NWDAF). In this scenario, horizontal federated learning can be performed among a plurality of local (local) NWDAFs. A central (central) NWDAF is used for implementing a function of the MMF module. A data collection coordination function (data collection coordination function, DCCF) is used for implementing a function of the DMF module, and may collect data in a corresponding network function (network function, NF) module. The local NWDAF is used for implementing functions of the MTF module and the MEF module. It may be understood that, herein, the functions of the MTF module and the MEF module may be implemented by a same local NWDAF, or may be respectively implemented by different local NWDAF instances. This is not limited in this application.

### Example 2:

In an example: Refer to FIG. 6B. Embodiments of this application may be applied to a horizontal federated learning scenario in a 3rd generation partnership project (3rd generation partnership project, 3GPP) user equipment (user equipment, UE)-radio access network (radio access network, RAN) scenario. In this scenario, horizontal federated learning is performed among a plurality of UEs. A RAN may implement a function of the MMF module, and the UE may implement functions of the MTF module, the MEF module, and the DMF module.

### Example 3:

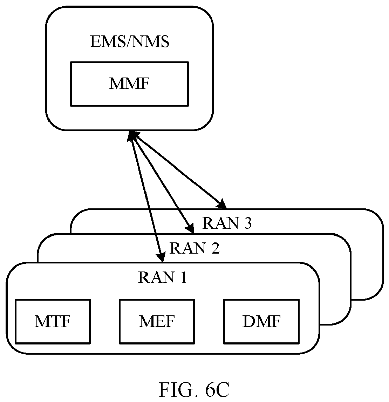

In an example: Refer to FIG. 6C. Embodiments of this application may be applied to a federated learning scenario in a radio access network (radio access network, RAN)-network element management/network management scenario. In this scenario, horizontal federated learning may be performed among a plurality of RANs. A function of the MMF module may be implemented by an element management system (element management system, EMS)/network management system (network management system, NMS), and functions of the MTF module, the MEF module, and the DMF module may be implemented by a RAN.

It may be understood that, the foregoing examples are merely examples for describing specific implementations of the functional modules shown in FIG. 3A and FIG. 3B with reference to specific application scenarios, but are not limitations on related entities. In another embodiment, the related entity may further implement another function. Details are not described herein again.

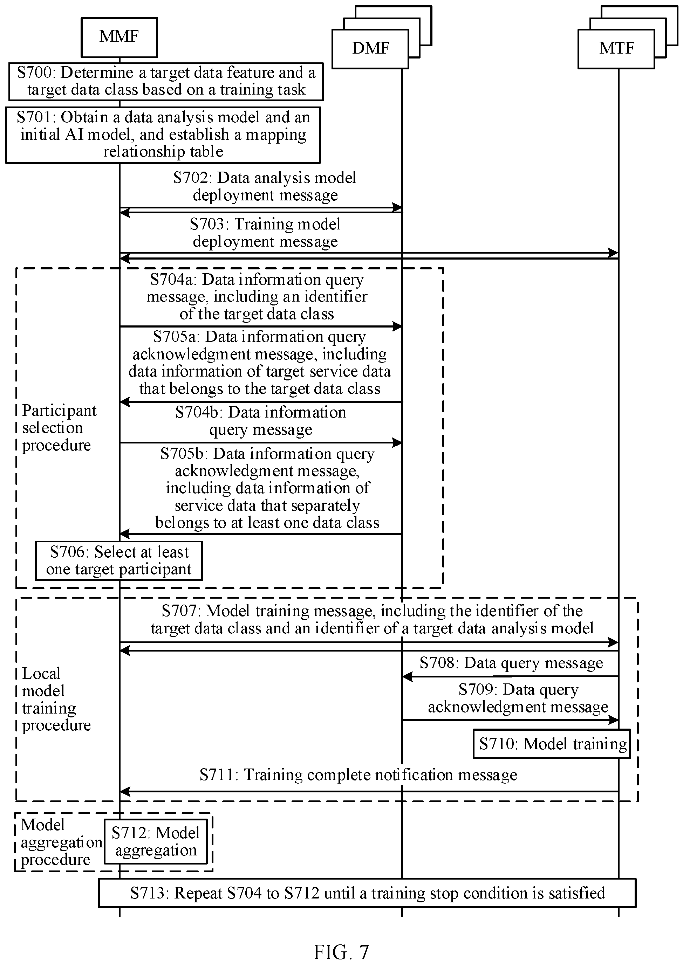

Based on the system architectures shown in FIG. 1, FIG. 3A and FIG. 3B, and FIG. 6A to FIG. 6C, the first node (or the MMF module) and the second node (or the functional modules of the second node) communicate with each other to implement the federated learning solution in this application. Because information exchanged between the functional modules is different, the solution may have different implementations. The following describes in detail a federated learning method provided in embodiments of this application with reference to FIG. 7 to FIG. 14. It may be understood that, in flowcharts shown in FIG. 7 to FIG. 14, on the second node side, functional modules such as the MTF module, the MEF module, and the DMF module may be deployed in entities that are different (or not completely the same) (for example, the scenario shown in FIG. 6A); or a same entity may be divided into functional modules such as the MTF module, the MEF module, and the DMF module based on function logic of the entity (for example, the scenarios shown in FIG. 6B and FIG. 6C). Correspondingly, communication between the MMF module on the first node side and each functional module on the second node side may be implemented through a communication interface with an entity in which each functional module is located.

It should be noted that in embodiments of this application, in a model training phase, a target AI model is trained to obtain an updated AI model, and an updated AI model of each second node is aggregated on the first node to obtain a federated learning model. During next iteration, the first node delivers the federated learning model to each target second node as a to-be-trained target AI model. This is repeated until a training task ends, to obtain a federated learning model corresponding to a target data class. In a model evaluation phase, after triggering an evaluation task, the first node may deliver, to each target second node, the federated learning model obtained through aggregation processing as a to-be-evaluated AI model, so that each target second node performs model evaluation on the federated learning model by using target service data corresponding to the corresponding target data class.

It should be noted that identifiers of AI models in a mapping relationship table maintained by the MMF module respectively correspond to identifiers of different to-be-trained AI models or identifiers of different to-be-evaluated AI models in different phases.

### Embodiment 1

In this embodiment, an MMF module may add a data analysis model deployment message to a communication interface with a DMF module. The data analysis model deployment message may be used for deploying a data analysis model in the DMF module, so that the DMF module identifies, analyzes, and classifies locally stored data by using the deployed data analysis model, so as to distinguish between data classes of service data that satisfies corresponding data features.

In a participant selection phase, when requesting data information from a plurality of DMF modules, the MMF module may include, in a data information query message (namely, a first query message) sent to any DMF module, an identifier of a target data feature and an identifier of a target data analysis model that are required by a training task, so that the plurality of DMF modules separately identify and analyze, by using the corresponding target data analysis model based on the indication, a full dataset that satisfies the target data feature, obtain, through classification, data subsets that separately belong to at least one data class, and include, in data distribution information fed back to the MMF module, an identifier of the at least one data class and data information of the data subsets that separately belong to the at least one data class. Further, the MMF module may select, based on the data distribution information fed back by the different DMF modules, at least two appropriate target DMF modules from the plurality of DMF modules as target participants (because the DMF module corresponds to the MTF module, that the target DMF modules are selected is that a target second node and another functional module are selected), so that the target participants participate in a training and evaluation process of a federated learning model corresponding to a target data class.

In a local model training phase, when requesting local model training from the MTF module of the target participant, the MMF module may further include, in a model training message sent to the target MTF module, the identifier of the target data feature and the identifier of the target data analysis model that are required by the training task, so that the MTF module may select, based on the indication, target service data that belongs to the target data class, and perform, by using the target service data, local model training on an AI model corresponding to the target data class. In this way, data poisoning caused by different data distributions of different participants to a finally obtained model is avoided.

Refer to FIG. 7. When a training task is triggered, steps of a federated learning method may include the following steps.

S700: Determine a target data feature and a target data class based on the training task.

It may be understood that, in this embodiment of this application, the target data class may be determined based on the training task; or after data distribution information of the plurality of DMF modules is received, the target data class may be determined based on the training task and the data distribution information of the plurality of DMF modules. This is not limited in this application. In addition, the target data feature may be a single data feature, or may be a data feature group (including a plurality of data features). When the target data feature is a data feature group, a plurality of data features included in the data feature group may have a corresponding association relationship, or may be irrelevant to each other. This is not limited in this application.

S701: The MMF module obtains a data analysis model and an initial AI model based on the training task, and establishes a mapping relationship table.

The MMF module may obtain at least one data analysis model and/or at least one initial AI model based on a requirement of the training task. The data analysis model and/or the initial AI model may be provided by a model provider. The MMF module may locally store a corresponding model file, or the MMF module may obtain a corresponding model from the model provider (a server or another storage device of the model provider).

The data analysis model is a clustering or classification model. Each data analysis model corresponds to one data feature group and identifies a data class of service data that satisfies the corresponding data feature group, to obtain at least one data class. Each data class corresponds to one data distribution and one initial AI model. The initial AI model corresponding to each data class may be used for learning and predicting a dataset of the corresponding data class.

Each data analysis model may be used for dividing a full dataset that satisfies the corresponding data feature into data subsets that respectively belong to different data classes, and the different data classes may be distinguished by using different identifiers. The mapping relationship table may be used for recording a mapping relationship between an identifier of a data feature, an identifier of an AI model, an identifier of a data analysis model, and an identifier of a data class. The identifier of the AI model may be an AI model name (including a name of a model used for training (train model name) or a name of a model used for testing (test model name)), and the identifier of the data class may be a data class index (data class index). For example, the identifier of the data class may be 1, 2, or 3, which indicates an ordinal number of a data class.

S702: The MMF module sends a data analysis model deployment message to each of the plurality of DMF modules, and receives feedback from the DMF modules.

The data analysis model deployment message may include an identifier of the at least one data analysis model and a model file of the at least one data analysis model, so as to deploy the at least one data analysis model in a corresponding DMF module. The feedback of the DMF module may include a notification message indicating that the at least one data analysis model is locally deployed.

S703: The MMF module sends a training model deployment message to each of the plurality of MTF modules, and receives feedback from the MTF modules.

The training model deployment message includes an identifier of the at least one initial AI model and a model file of the at least one initial AI model. It may be understood that an implementation step of S703 may not be limited thereto, for example, may be completed in any phase between S701 and 5707.

A participant selection procedure includes:
The participant selection procedure may include two implementations:
In an optional implementation, in S704a, the MMF module sends a data information query message (namely, a first query message) to each of the plurality of DMF modules.

The data information query message may include an identifier of the target data feature, an identifier of the target data class, an identifier of a target data analysis model, query indicator (object) information, and the like.

The identifier of the target data feature indicates a data feature that target service data required by the training task satisfies, so that the DMF module obtains, from a locally stored original dataset, a full dataset that satisfies the target data feature.

The identifier of the target data class indicates to query the full dataset that satisfies the target data feature for data information of target service data belonging to the target data class.

The identifier of the target data analysis model indicates the DMF module to use the corresponding target data analysis model to identify, analyze, and classify the full dataset that satisfies the target data feature, so as to classify the full dataset into data subsets that respectively belong to different data classes.

The query indicator information indicates, for each data class, data information that needs to be queried for, for example, a size of a data subset and a data generation time period.

After receiving the data information query message, the DMF module identifies, analyzes, and classifies, based on related indication information included in the data information query message and by using the corresponding target data analysis model, the corresponding full dataset, to obtain the data distribution information that needs to be fed back to the MMF module. The data distribution information may include the identifier of the target data class, and the data information of the target service data that is stored in the DMF module, that satisfies the target data feature, and that belongs to the target data class, where the data information includes a size of a data subset, a data generation period, and the like.

S705a: Each DMF module returns a data information query acknowledgment message to the MMF module.

The data information query acknowledgment message includes the found corresponding data distribution information, including the identifier of the target data class, and the data information of the target service data that is stored in the DMF module, that satisfies the target data feature, and that belongs to the target data class, where the data information includes the size of the data subset, the data generation time period, and the like.

In an optional implementation, in S704b, the MMF module sends a data information query message (namely, a first query message) to each of the plurality of DMF modules.

The data information query message may include an identifier (data Name) of the target data feature, an identifier of a target data analysis model, query indicator (object) information, and the like.

Because the data information query message does not indicate an identifier of the target data class, correspondingly, after identifying, based on the target data analysis model, a full dataset that satisfies the target data feature, the DMF module may query data information of obtained service data that separately belongs to the at least one data class, where the data information includes a size of a data subset, a data generation time period, and the like.

S705b: Each DMF module returns a data information query acknowledgment message to the MMF module.

The data information query acknowledgment message carries the data distribution information of the DMF module, and the data distribution information may be implemented as a query result list. The query result list includes an identifier of the at least one data class and the data information of the service data that separately belongs to the at least one data class.

It may be understood that during specific implementation, the MMF module may select to obtain the corresponding data distribution information of any DMF module in either implementation of S704a and S705a or S704b and S705b. This is not limited in this application.

S706: The MMF module selects at least two target participants (including at least two target second nodes and corresponding functional modules of the target second nodes) based on the data distribution information respectively fed back by the plurality of DMF modules and by using an internal algorithm decision of the MMF module; in other words, selects participants that participate in a current model training process of a federated learning model corresponding to the target data class.

It may be understood that identifiers of data classes, corresponding data information, and the like that are included in the data distribution information respectively fed back by the plurality of DMF modules may be used as one of decision bases. The at least two target participants corresponding to the target data class are selected depending on whether the target service data required by the training task exists in service data locally stored in each DMF module, a data volume of a corresponding data subset, and the like. The at least two target participants may participate in the current model training process, to obtain the federated learning model corresponding to the target data class.

For the target data class, after the at least two target participants are selected, a local model training procedure includes:
S707: The MMF module sends a model training message to any target MTF module.

The model training message includes an identifier of a target AI model, where the target AI model corresponds to the target data class; a model file of the target AI model; the identifier of the target data class; the identifier of the target data analysis model; training data volume (train data volume) indication information; and the like.

The identifier of the target data class may indicate a data class to which a data subset that needs to be used by the target MTF module to perform model training belongs.

The identifier of the target data analysis model may indicate the target MTF module to obtain the target data analysis model that needs to be used for obtaining a data subset belonging to the target data class.

The training data volume indication information indicates a data volume that needs to be used for model training.

S708: Any target MTF module sends a data query message (namely, a second query message) to a corresponding target DMF module.

The data query message includes the identifier of the target data feature, data type (type) indication information, the identifier of the target data class, the training data volume indication information, the identifier of the target data analysis model, and the like.

The data type indication information may include two types: a training (train) indication and a test (test) indication, which are respectively used for obtaining a training dataset and a test dataset. In this embodiment of this application, for ease of differentiation, data type indication information for the training indication is referred to as first data type indication information, and data type indication information for the test indication is referred to as second data type indication information. In S708, the data type is the first data type indication information for the training (train) indication, so as to obtain the training dataset.

S709: The target DMF module sends a data query acknowledgment message to the corresponding target MTF module.

The data query acknowledgment message includes the found target service data that satisfies the target data feature and that belongs to the target data class, namely, the data subset corresponding to the target data class, namely, the training dataset.

S710: Any target MTF module performs model training on the target AI model by using the data subset that corresponds to the target data class and that is returned by the corresponding target DMF module, to obtain an updated AI model.

S711: After the model training is completed, any target MTF module sends a training complete notification message to the MMF module.

The training complete notification message includes the identifier of the trained AI model, a model file of the updated AI model, and a data volume of a training dataset used for training the AI model.

S712: After collecting training complete notification messages respectively returned by all the at least two target MTF modules that participate in the current round of model training, the MMF module aggregates, by using an aggregation algorithm (for example, a federated averaging algorithm), updated AI models returned by the target MTF modules, and updates parameters of the federated learning model.

For example, in the aggregation algorithm, the data volume of the training dataset used by each target MTF module for training the corresponding AI model may be used for determining a weight factor of the updated AI model obtained by the corresponding target MTF module through training. The weight factor is used for representing a weight of the corresponding AI model during aggregation processing.

S713: The MMF module determines whether a training stop condition is satisfied. If the condition is not satisfied, S704 to S712 are repeated, to perform a next round of participant selection, model training, and model aggregation in an iterative manner, the current procedure, namely, the current model training process ends until the training stop condition is satisfied, that is, the training task for the target data class is completed, so that the federated learning model corresponding to the target data class is obtained.

### Embodiment 2

This embodiment is an improvement made based on Embodiment 1. For similarities, refer to related descriptions with reference to FIG. 7, and details are not described below again.

In this embodiment, the MMF module may deliver a mapping relationship table to each of the plurality of MTF modules. The mapping relationship may be used for recording a mapping relationship between an identifier of a data feature, an identifier of an AI model, an identifier of a data analysis model, and an identifier of a data class. Further, in a model training message sent by the MMF module to each target MTF module, an identifier of a target data class and an identifier of a target data analysis model that are required for current model training may not be specified. Therefore, when the MMF module needs to frequently deliver the model training message to each target MTF module, a quantity of messages transmitted between communication interfaces can be effectively reduced, to reduce signaling overheads.

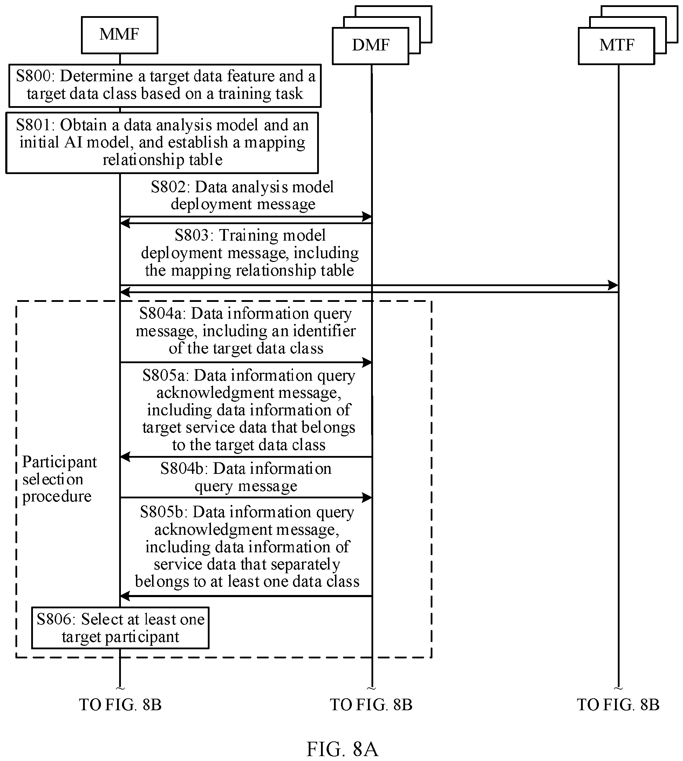

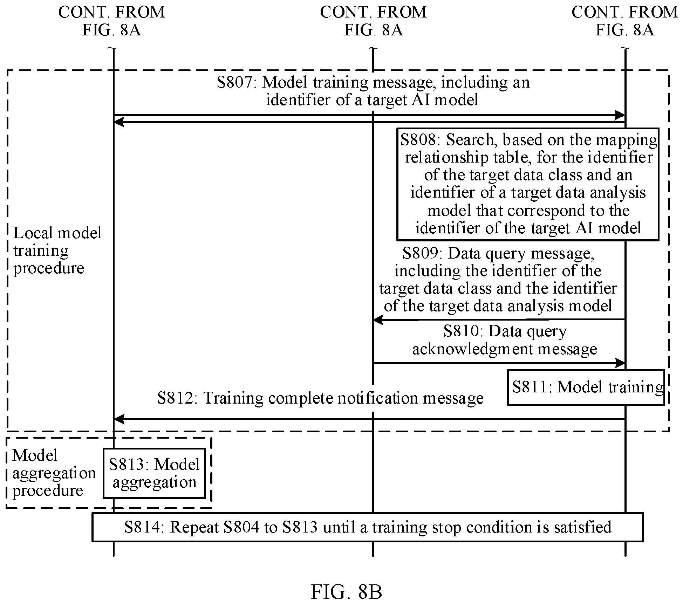

Refer to FIG. 8A and FIG. 8B. When a training task is triggered, steps of a federated learning method may include the following steps.

S800: Determine a target data feature and a target data class based on the training task. For detailed explanations, refer to S700. Details are not described herein again.

S801: The MMF module obtains a data analysis model and an initial AI model based on the training task, and establishes a mapping relationship table. For detailed explanations, refer to S701. Details are not described herein again.

S802: The MMF module sends a data analysis model deployment message to each of the plurality of DMF modules, and receives feedback from the DMF modules. For detailed explanations, refer to S702. Details are not described herein again.

S803: The MMF module sends a training model deployment message to each of the plurality of MTF modules, and receives feedback from the MTF modules.

The training model deployment message includes an identifier of the at least one initial AI model, a model file of the at least one initial AI model, and a mapping relationship table.

The mapping relationship table may record an identifier of a data class and an identifier of a data analysis model that correspond to the at least one initial AI model, so that an identifier of the target data class and an identifier of a target data analysis model that correspond to an identifier of a target AI model are searched for based on the mapping relationship table in a subsequent process.

It may be understood that an implementation step of S803 may not be limited thereto, for example, may be completed in any phase between S80 1 and S807. It may be understood that during specific implementation, with reference to an actual method step, in S803, the MMF module may send the mapping relationship table to each DMF module, or may send only a mapping relationship between the identifier of the target AI model, the identifier of the target data class, and the identifier of the target data analysis model to each DMF module. This is not limited in this application.

A participant selection procedure includes:
The participant selection procedure may include two implementations:
In an optional implementation, in S804a, the MMF module sends a data information query message (namely, a first query message) to each of the plurality of DMF modules.

The data information query message may include an identifier of the target data feature, the identifier of the target data class, the identifier of the target data analysis model, query indicator information, and the like.

S805a: Each DMF module returns a data information query acknowledgment message to the MMF module.

The data information query acknowledgment message includes found corresponding data distribution information, including the identifier of the target data class, and data information of target service data that is stored in the DMF module, that satisfies the target data feature, and that belongs to the target data class, where the data information includes a size of a data subset, a data generation time period, and the like.

In an optional implementation:
In S804b, the MMF module sends a data information query message (namely, a first query message) to each of the plurality of DMF modules.

The data information query message may include an identifier of the target data feature, the identifier of the target data analysis model, query indicator information, and the like.

S805b: Each DMF module returns a data information query acknowledgment message to the MMF module.

The data information query acknowledgment message carries data distribution information of the DMF module, and the data distribution information may be implemented as a query result list. The query result list includes an identifier of at least one data class and data information of service data that is stored in the DMF module and that separately belongs to the at least one data class.

It may be understood that during specific implementation, the MMF module may select to obtain corresponding data distribution information of any DMF module in either implementation of S804a and S805a or S804b and S805b. This is not limited in this application. For detailed descriptions of S804a and S805a or S804b and S805b, refer to S704a and S705a or S704b and S705b. Details are not described herein again.

S806: The MMF module selects at least two target participants (including at least two target second nodes and corresponding functional modules of the target second nodes) based on the data distribution information respectively fed back by the plurality of DMF modules and by using an internal algorithm decision of the MMF module; in other words, selects participants that participate in a current model training process of a federated learning model corresponding to the target data class.

It may be understood that identifiers of data classes, corresponding data information, and the like that are included in the data distribution information respectively fed back by the plurality of DMF modules may be used as one of decision bases. The at least two target participants corresponding to the target data class are selected depending on whether the target service data required by the training task exists in service data locally stored in each DMF module, a data volume of a corresponding data subset, and the like. The at least two target participants may participate in the current model training process, to obtain the federated learning model corresponding to the target data class.

For the target data class, after the at least two target participants are selected, a local model training procedure includes:
S807: The MMF module sends a model training message to any target MTF module.

The model training message includes the identifier of the target AI model, where the target AI model corresponds to the target data class; a model file of the target AI model; training data volume indication information; and the like. For detailed explanations, refer to S707. Details are not described herein again.

S808: The target MTF module searches, based on the mapping relationship table, for the identifier of the target data class and the identifier of the target data analysis model that correspond to the identifier that is of the target AI model and that is included in the model training message.

S809: Any target MTF module sends a data query message (namely, a second query message) to a corresponding target DMF module.

The data query message includes the identifier of the target data feature, data type (type) indication information, the identifier of the target data class, the training data volume indication information, the identifier of the target data analysis model, and the like. For detailed explanations, refer to S708. Details are not described herein again.

S810: Any target DMF module sends a data query acknowledgment message to the corresponding target MTF module.

The data query acknowledgment message includes the target service data, found by using the target data analysis model, that satisfies the target data feature and that belongs to the target data class, namely, a data subset corresponding to the target data class, namely, a training dataset. For detailed explanations, refer to S709. Details are not described herein again.

S811: The target MTF module performs model training on the target AI model by using the data subset that corresponds to the target data class and that is returned by the target DMF module, to obtain an updated AI model. For detailed explanations, refer to S710. Details are not described herein again.

S812: After the model training is completed, any target MTF module sends a training complete notification message to the MMF module.

The training complete notification message includes the identifier of the trained AI model, a model file of the updated AI model, and a data volume of a training dataset used for training the AI model. For detailed explanations, refer to S711. Details are not described herein again.

S813: After collecting training complete notification messages respectively returned by all the at least two target MTF modules that participate in the current round of model training, the MMF module aggregates, by using an aggregation algorithm (for example, a federated averaging algorithm), updated AI models returned by the target MTF modules, and updates parameters of the federated learning model. For detailed explanations, refer to S712. Details are not described herein again.

S814: The MMF module determines whether a training stop condition is satisfied. If the condition is not satisfied, S804 to S813 are repeated, to perform a next round of participant selection, model training, and model aggregation, the current procedure, namely, the current model training process ends until the training stop condition is satisfied, that is, the training task for the target data class is completed, so that the federated learning model corresponding to the target data class is obtained.

In comparison with Embodiment 1, because the MMF module has sent the mapping relationship table to each MTF module in S803, any MTF module is selected as a participant, and after receiving the model training message in S808, the MTF module may search, based on the mapping relationship table, for the identifier of the target data class and the identifier of the target data analysis model that correspond to the identifier that is of the target AI model and that is included in the model training message; in addition, include the identifier of the target AI model, the identifier of the target data class, and the identifier of the target data analysis model in the data query message sent to the DMF module, so that the DMF module obtains, based on the indication in the received data query message, the target service data (namely, the training dataset) required for training the corresponding target AI model, and feeds back the target service data to the MTF module. Therefore, when the MMF module needs to frequently deliver the model training message to each target MTF module, a quantity of messages transmitted between communication interfaces can be effectively reduced, to reduce signaling overheads.

### Embodiment 3

This embodiment is an improvement made based on Embodiment 1. For similarities, refer to related descriptions with reference to FIG. 7, and details are not described below again.

In this embodiment, the MMF module may deliver a mapping relationship table to each of the plurality of DMF modules. The mapping relationship may be used for recording a mapping relationship between an identifier of a data feature, an identifier of an AI model, an identifier of a data analysis model, and an identifier of a data class. Further, in a model training message sent by the MMF module to each target MTF module and a data query message sent by each MTF module to a corresponding DMF module, an identifier of a target data class and an identifier of a target data analysis model that are required for current model training may not be specified. Therefore, when the MMF module needs to frequently deliver the model training message to each target MTF module, a quantity of messages transmitted between communication interfaces can be effectively reduced, to reduce signaling overheads.

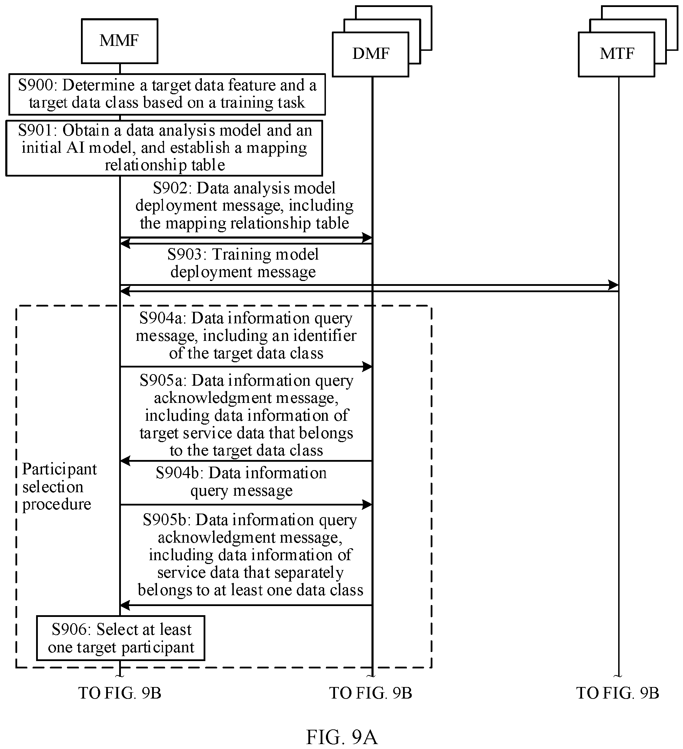

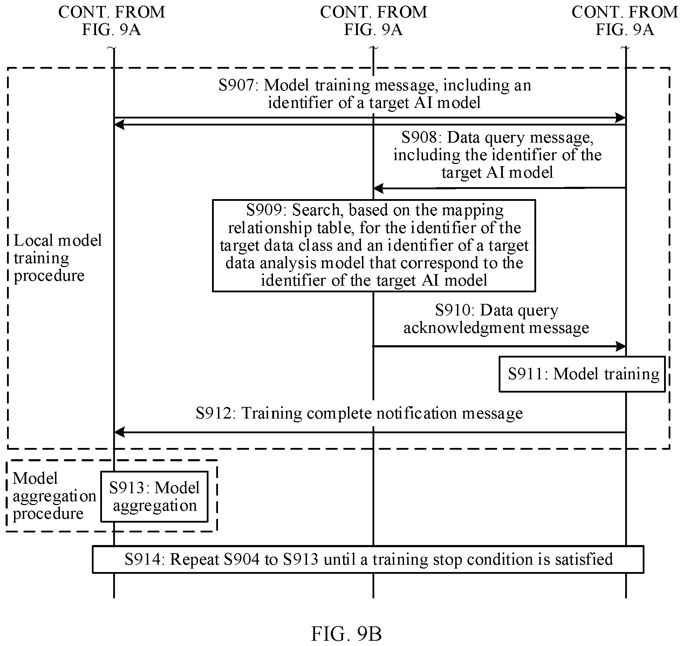

Refer to FIG. 9A and FIG. 9B. When a training task is triggered, steps of a federated learning method may include the following steps.

S900: Determine a target data feature and a target data class based on the training task. For detailed explanations, refer to S700. Details are not described herein again.

S901: The MMF module obtains a data analysis model and an initial Al model based on the training task, and establishes a mapping relationship table. For detailed explanations, refer to S701. Details are not described herein again.

S902: The MMF module sends a data analysis model deployment message to each of the plurality of DMF modules, and receives feedback from the DMF modules.

The data analysis model deployment message may include an identifier of at least one data analysis model and a model file of the at least one data analysis model, so as to deploy the at least one data analysis model and the mapping relationship table in the DMF module. The feedback of the DMF module may include a notification message indicating that the at least one data analysis model is locally deployed.

The mapping relationship table may record an identifier of a data class and an identifier of a data analysis model that correspond to the at least one initial AI model, so that an identifier of the target data class and an identifier of a target data analysis model that correspond to an identifier of a target AI model are searched for based on the mapping relationship table in a subsequent process.

S903: The MMF module sends a training model deployment message to each of the plurality of MTF modules, and receives feedback from the MTF modules. For detailed explanations, refer to S703. Details are not described herein again. It may be understood that an implementation step of S903 may not be limited thereto, for example, may be completed in any phase between S901 and S907.

A participant selection procedure includes:
The participant selection procedure may include two implementations:
In an optional implementation, in S904a, the MMF module sends a data information query message (namely, a first query message) to each of the plurality of DMF modules.

The data information query message may include an identifier of the target data feature, the identifier of the target data class, the identifier of the target data analysis model, query indicator information, and the like.

S905a: Each DMF module returns a data information query acknowledgment message to the MMF module.

The data information query acknowledgment message includes found corresponding data distribution information, including the identifier of the target data class, and data information of target service data that is stored in the DMF module, that satisfies the target data feature, and that belongs to the target data class, where the data information includes a size of a data subset, a data generation time period, and the like.

In an optional implementation:
In S904b, the MMF module sends a data information query message (namely, a first query message) to each of the plurality of DMF modules.

The data information query message may include the identifier (data Name) of the target data feature, the identifier of the target data analysis model, query indicator (object) information, and the like.

S905b: The DMF module returns a data information query acknowledgment message to the MMF module.

The data information query acknowledgment message carries data distribution information of the DMF module, and the data distribution information may be implemented as a query result list. The query result list includes an identifier of at least one data class and data information of service data that is stored in the DMF module and that separately belongs to the at least one data class.

It may be understood that during specific implementation, the MMF module may select to obtain corresponding data distribution information of any DMF module in either implementation of S904a and S905a or S904b and S905b. This is not limited in this application. For detailed explanations, refer to S704a and S705a or S704b and S705b. Details are not described herein again.

S906: The MMF module selects at least two target participants (including at least two target second nodes and corresponding functional modules of the target second nodes) based on the data distribution information respectively fed back by the plurality of DMF modules and by using an internal algorithm decision of the MMF module; in other words, selects participants that participate in a current model training process of a federated learning model corresponding to the target data class.

It may be understood that identifiers of data classes, corresponding data information, and the like that are included in the data distribution information respectively fed back by the plurality of DMF modules may be used as one of decision bases. The at least two target participants corresponding to the target data class are selected depending on whether the target service data required by the training task exists in service data locally stored in each DMF module, a data volume of a corresponding data subset, and the like. The at least two target participants may participate in the current model training process, to obtain the federated learning model corresponding to the target data class.

For the target data class, after the at least two target participants are selected, a local model training procedure includes:
S907: The MMF module sends a model training message to any target MTF module.

The model training message includes the identifier of the target AI model, where the target AI model corresponds to the target data class; a model file of the target AI model; training data volume indication information; and the like. For detailed explanations, refer to S707. Details are not described herein again.

S908: The target MTF module sends a data query message (namely, a second query message) to the corresponding target DMF module. The data query message includes the identifier of the target data feature, the identifier of the target AI model, and data type (type) indication information. In S908, a data type is first data type indication information for a training (train) indication, so as to obtain a training dataset.

S909: After receiving the data query message, the target DMF module searches, based on the mapping relationship table, for the identifier of the target data class and the identifier of the target data analysis model that correspond to the identifier that is of the target AI model and that is included in the model training message; and obtains, based on the identifier of the target data class and the identifier of the target data analysis model, the target service data that belongs to the target data class.

S910: The target DMF module sends a data query acknowledgment message to the corresponding target MTF module.

The data query acknowledgment message includes the found target service data that belongs to the target data class, namely, a data subset corresponding to the target data class, namely, the training dataset. For detailed explanations, refer to S709. Details are not described herein again.

S911: Any target MTF module performs model training on the target AI model by using the data subset that corresponds to the target data class and that is returned by the target DMF module, to obtain an updated AI model. For detailed explanations, refer to S710. Details are not described herein again.

S912: After model training is completed, any target MTF module sends a training complete notification message to the MMF module, where the training complete notification message includes the identifier of the trained AI model, a model file of the updated AI model, a data volume of a training dataset used for training the AI model, and the like. For detailed explanations, refer to S711. Details are not described herein again.

S913: After collecting training complete notification messages respectively returned by all the at least two target MTF modules that participate in the current round of model training, the MMF module aggregates, by using an aggregation algorithm (for example, a federated averaging algorithm), updated AI models returned by the target MTF modules, and updates parameters of the federated learning model. For detailed explanations, refer to S712. Details are not described herein again.

S914: The MMF module determines whether a training stop condition is satisfied. If the condition is not satisfied, S904 to S913 are repeated, to perform a next round of participant selection, model training, and model aggregation, the current procedure, namely, the current model training process ends until the training stop condition is satisfied, that is, the training task for the target data class is completed, so that the federated learning model corresponding to the target data class is obtained.

Compared with Embodiment 1, because the MMF module has sent the mapping relationship table to each DMF module in S902, after any MTF module is selected as a participant and the MTF module receives the model training message in S907, the MTF module may include the identifier of the target AI model in the data query message sent to the DMF module, so that the DMF module searches, based on the mapping relationship table, for the identifier of the target data class and the identifier of the target data analysis model that correspond to the identifier of the target AI model; and feeds back, based on the identifier of the target data class and the identifier of the target data analysis model, the target service data (namely, the training dataset) required for training the target AI model to the corresponding MTF module, to obtain the federated learning model corresponding to the target data class. Therefore, when the MMF module needs to frequently deliver the model training message to each target MTF module, a quantity of messages transmitted between communication interfaces can be effectively reduced, to reduce signaling overheads.

### Embodiment 4

This embodiment is an example of horizontal federated learning model training performed when a data analysis model and a to-be-trained AI model are jointly deployed in the MTF module if the data analysis model and the to-be-trained AI model cannot be split. It may be understood that in this embodiment of this application, an AI model may implement a data analysis function; or an AI model may be bound to a data analysis model. This is not limited in this application.

In this embodiment, a to-be-trained AI model is deployed in each MTF module. Because the data analysis model and the to-be-trained AI model cannot be split, a data analysis request message may be added between the DMF module and the MTF module, so that the DMF module can identify, analyze, and classify, by using a data analysis model deployed in the corresponding MTF module, a full dataset that satisfies a corresponding data feature, to obtain data distribution information of service data locally stored in the DMF module, and feed back the data distribution information to the MMF module. Further, the MMF module may select, based on the data distribution information of different DMF modules, an appropriate target participant to participate in a current model training process of a federated learning model for a target data class. In a local model training phase, when indicating the MTF module to perform local model training, the MMF module may further include an identifier of the target data class and an identifier of a target data analysis model in a model training message sent to the MTF module, so that the MTF module may select, based on the identifier of the target data class and the identifier of the target data analysis model, target service data belonging to the target data class to perform local model training on a target AI model. In this way, data poisoning caused by different data distributions of different participants to a finally obtained federated learning model is avoided.

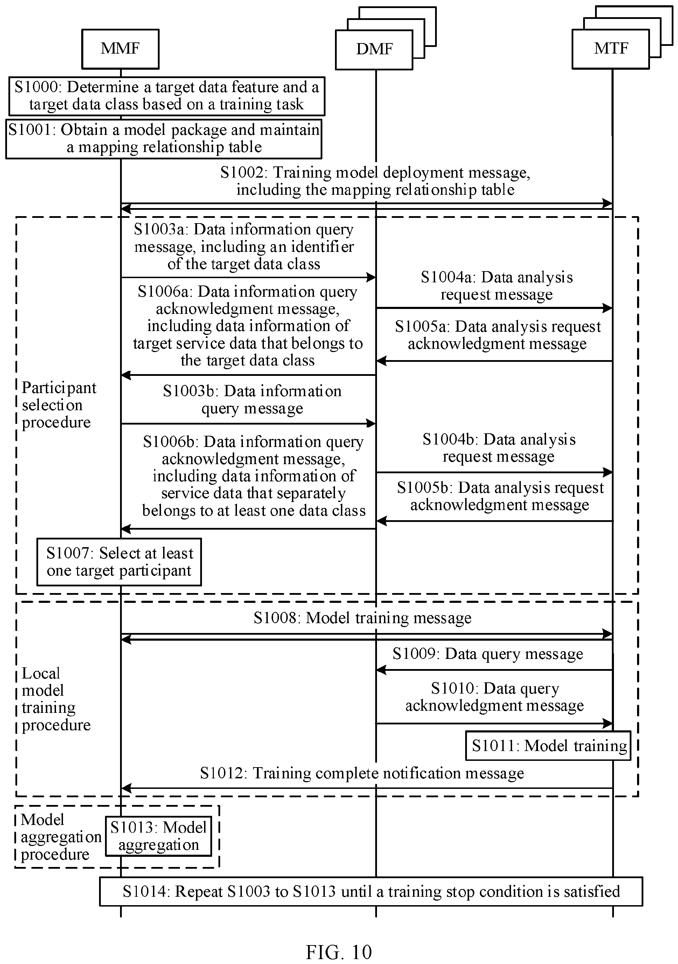

Refer to FIG. 10. When a training task is triggered, steps of a federated learning method may include the following steps.

S1000: Determine a target data feature and a target data class based on the training task. For detailed explanations, refer to S700. Details are not described herein again.

S1001: The MMF module obtains a model package required by the training task, and maintains a mapping relationship table.

The model package includes at least one data analysis model, an initial AI model corresponding to each data class, and a mapping relationship between an identifier of a data class and an identifier of an AI model. The mapping relationship table maintained by the MMF module is used for recording a mapping relationship between an identifier of a data feature, an identifier of an AI model, an identifier of a data analysis model, and an identifier of a data class, and includes an identifier of a data class and an identifier of a data analysis model that respectively correspond to at least one AI model, so as to search, based on the mapping relationship table in a subsequent process, for an identifier of a target data class and an identifier of a target data analysis model that are correspond to an identifier of a target AI model.

S1002: The MMF module sends a training model deployment message to each of the plurality of MTF modules, and receives feedback from the DMF modules.

The training model deployment message includes an identifier of the at least one data analysis model, a model file of the at least one data analysis model, an identifier of the initial AI model corresponding to each data class, a model file corresponding to the initial AI model, and the mapping relationship table.

A participant selection procedure includes:
The participant selection procedure may include two implementations:
In an optional implementation, in S1003a, the MMF module sends a data information query message (namely, a first query message) to each of the plurality of DMF modules.

The data information query message may include an identifier of the target data feature, the identifier of the target data class, the identifier of the target data analysis model, query indicator information, and the like.

S1004a: Each DMF module sends a data analysis request message to a corresponding MTF module.

The data analysis request includes the identifier of the target data class, the identifier of the target data analysis model, and a full dataset of service data that is stored in the DMF module and that satisfies the target data feature.

S1005a: After identifying, analyzing, and classifying the full dataset based on the identifier of the target data analysis model by using the corresponding target data analysis model, the MTF module obtains a data subset of service data belonging to the target data class, and feeds back a data analysis request acknowledgment message to the corresponding DMF module.

The data analysis request acknowledgment message includes the data subset that corresponds to the corresponding data class and that is obtained by dividing the full dataset based on the data analysis model.

S1006a: After analyzing each data subset, the DMF module sends a data information query acknowledgment message to the MMF module.

The data information query acknowledgment message includes found corresponding data distribution information, including the identifier of the target data class, and data information of target service data that is stored in the DMF module, that satisfies the target data feature, and that belongs to the target data class, where the data information includes a size of a data subset, a data generation time period, and the like.

In an optional implementation, in S1003b, the MMF module sends a data information query message (namely, a first query message) to each of the plurality of DMF modules.

The data information query message may include an identifier of the target data feature, the identifier of the target data analysis model, query indicator (object) information, and the like.

S1004b: Each DMF module sends a data analysis request message to a corresponding MTF module.

The data analysis request includes the identifier of the target data analysis model, and a full dataset of service data that is stored in the DMF module and that satisfies the target data feature.

S 1005b: After identifying, analyzing, and classifying the full dataset based on the identifier of the target data analysis model by using the corresponding target data analysis model, the MTF module obtains a data subset of service data belonging to the target data class, and feeds back a data analysis request acknowledgment message to the corresponding DMF module. The data analysis request acknowledgment message includes the data subset that corresponds to the corresponding data class and that is obtained by dividing the full dataset based on the target data analysis model.

S1006b: After analyzing each data subset, the DMF module sends a data information query acknowledgment message to the MMF module.

The data information query acknowledgment message carries data distribution information of the DMF module, and the data distribution information may be implemented as a query result list. The query result list includes an identifier of at least one data class and data information of service data that is stored in the DMF module and that separately belongs to the at least one data class.

It may be understood that during specific implementation, the MMF module may select to obtain corresponding data distribution information of any DMF module in either implementation of S1003a to S1006a or S1003b to S1006b. This is not limited in this application.

S1007: The MMF module selects at least two target participants (including at least two target second nodes and corresponding functional modules of the target second nodes) based on the data distribution information respectively fed back by the plurality of DMF modules and by using an internal algorithm decision of the MMF module; in other words, selects participants that participate in a current model training process of a federated learning model corresponding to the target data class.

It may be understood that identifiers of data classes, corresponding data information, and the like that are included in the data distribution information respectively fed back by the plurality of DMF modules may be used as one of decision bases. The at least two target participants corresponding to the target data class are selected depending on whether the target service data required by the training task exists in service data locally stored in each DMF module, a data volume of a corresponding data subset, and the like. The at least two target participants may participate in the current model training process, to obtain the federated learning model corresponding to the target data class.

For the target data class, after the at least two target participants are selected, a local model training procedure includes:
S1008: The MMF module sends a model training message to any target MTF module.

The model training message includes the identifier of the target AI model, where the target AI model corresponds to the target data class; a model file of the target AI model; training data volume indication information; and the like. For detailed explanations, refer to S707. Details are not described herein again.

S1009: The target MTF module sends a data query message (namely, a second query message) to the corresponding target DMF module.

The data query message includes the identifier of the target data feature, a data type (type), the identifier of the target data class, the identifier of the target data analysis model, training data volume indication information, and the like. For detailed explanations, refer to S708. Details are not described herein again.

S1010: The target DMF module feeds back a data query acknowledgment message to the corresponding target MTF module.

The data query acknowledgment message includes the found target service data that satisfies the target data feature and that belongs to the target data class, namely, a data subset corresponding to the target data class, namely, a training dataset.

S1011: The target MTF module performs model training on the target AI model by using the data subset that corresponds to the target data class and that is returned by the target DMF module, to obtain an updated AI model.

S1012: After model training is completed, any target MTF module sends a training complete notification message to the corresponding target MMF module, where the training complete notification message includes the identifier of the trained AI model, a model file of the updated AI model, and a data volume of a training dataset used for training the AI model.

S1013: After collecting training complete notification messages respectively returned by all the at least two target MTF modules that participate in the current round of model training, the MMF module aggregates, by using an aggregation algorithm (for example, a federated averaging algorithm), updated AI models returned by the target MTF modules, and updates parameters of the federated learning model.

For example, in the aggregation algorithm, the data volume of the training dataset used by each target MTF module for training the corresponding AI model may be used for determining a weight factor of the updated AI model obtained by the corresponding target MTF module through training. The weight factor is used for representing a weight of the corresponding AI model during aggregation processing.

S1014: The MMF module determines whether a training stop condition is satisfied. If the condition is not satisfied, S704 to S712 are repeated, to perform a next round of participant selection, model training, and model aggregation in an iterative manner, the current procedure, namely, the current model training process ends until the training stop condition is satisfied, that is, the training task for the target data class is completed, so that the federated learning model corresponding to the target data class is obtained.

### Embodiment 5

This embodiment is another implementation solution of the same scenario in Embodiment 4. A difference from Embodiment 4 lies in that, in Embodiment 5, the MMF module may directly request the MTF module to query for data information.

In this embodiment, a to-be-trained AI model is deployed in each MTF module. Because a data analysis model and a to-be-trained AI model cannot be split, a data information query message is added between the MMF module and the MTF module, so that the MTF module can feed back, to the MMF module, data distribution information of service data stored in the corresponding DMF module. Further, the MMF module may select, based on the data distribution information of different DMF modules, an appropriate target participant to participate in a current model training process of a federated learning model for a target data class. In a local model training phase, when requesting the MTF module to perform local model training, the MMF module may further include an identifier of the target data class and an identifier of a target data analysis model in a model training message sent to the MTF module, so that the MTF module may select, based on the identifier of the target data class and the identifier of the target data analysis model, a data subset belonging to the corresponding target data class to perform local model training. In this way, data poisoning caused by different data distributions of different participants to a finally obtained model is avoided.

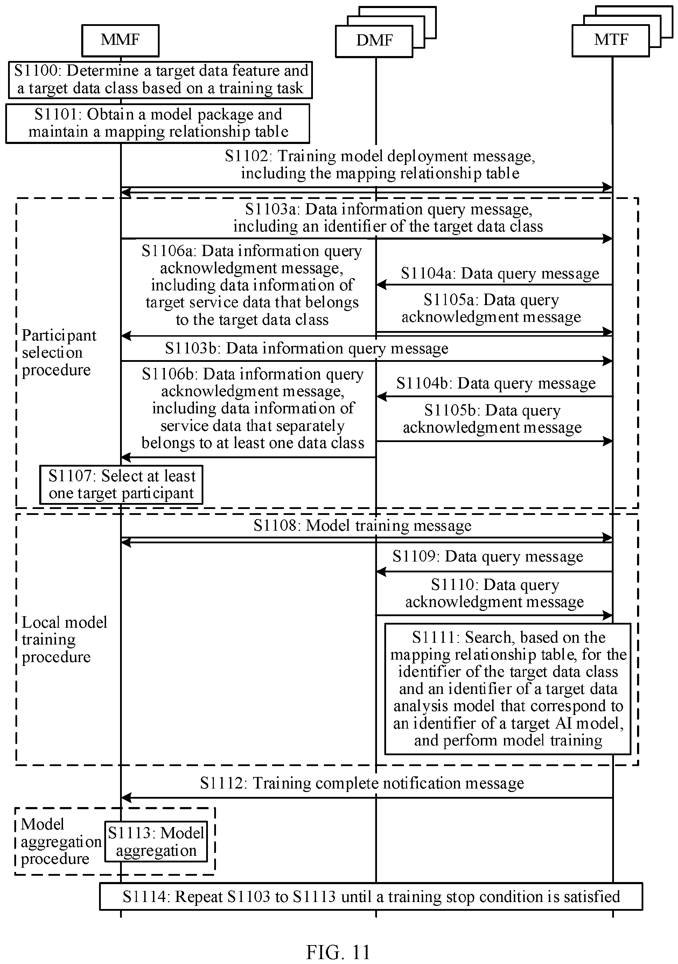

Refer to FIG. 11. When a training task is triggered, a federated learning method may include the following steps.

S1100: Determine a target data feature and a target data class based on the training task. For detailed explanations, refer to S700. Details are not described herein again.

S1101: The MMF module obtains a model package required by the training task, and maintains a mapping relationship table. For detailed explanations, refer to S1001. Details are not described herein again.

S1102: The MMF module sends a training model deployment message to each of the plurality of MTF modules, and receives feedback from the MTF module.

The training model deployment message includes an identifier of at least one data analysis model, a model file of the at least one data analysis model, an identifier of an initial AI model corresponding to each data class, a model file corresponding to the initial AI model, and the mapping relationship table.

A participant selection procedure includes:
The participant selection procedure may include two implementations:
In an optional implementation, in S1103a, the MMF module sends a data information query message (namely, a first query message) to any target MTF module.

The data information query message may include an identifier of the target data feature, an identifier of the target data class, an identifier of a target data analysis model, query indicator information, and the like.

S1104a: Each target MTF module sends a data query message to a corresponding target DMF module.

The data query message includes the identifier of the target data feature.

S1105a: The target DMF module sends a data query acknowledgment message to the corresponding target MTF module.

The data query acknowledgment message includes a full dataset that satisfies the target data feature and that is stored in the target DMF module.

S1106a: After identifying, analyzing, and classifying the full dataset based on the identifier of the target data analysis model by using the corresponding target data analysis model, the target MTF module obtains a data subset of service data belonging to the target data class, and feeds back a data information query acknowledgment message to the MMF module.

The data information query acknowledgment message includes found corresponding data distribution information, including the identifier of the target data class, and data information of target service data that is stored in the DMF module, that satisfies the target data feature, and that belongs to the target data class, where the data information includes a size of a data subset, a data generation time period, and the like.

In an optional implementation, in S1103b, the MMF module sends a data information query message (namely, a first query message) to a target MTF module. The data information query message may include an identifier of the target data feature, an identifier of a target data analysis model, query indicator (object) information, and the like.

S1104b: The target MTF module sends a data query message to a corresponding target DMF module.

The data query message includes the identifier of the target data feature.

S1105b: The target DMF module sends a data query acknowledgment message to the corresponding target MTF module. The data query acknowledgment message includes a full dataset that satisfies the target data feature and that is stored in the target DMF module.

S 1 106b: After identifying, analyzing, and classifying the full dataset based on the identifier of the target data analysis model by using the corresponding target data analysis model, the target MTF module obtains a data subset of service data that separately belongs to at least one data class, and feeds back a data information query acknowledgment message to the MMF module.

The data information query acknowledgment message carries data distribution information of the DMF module, and the data distribution information may be implemented as a query result list. The query result list includes an identifier of the at least one data class and data information of the service data that separately belongs to the at least one data class.

It may be understood that during specific implementation, the MMF module may select to obtain corresponding data distribution information of any DMF module in either implementation of S1103a to S1106a or S1103b to S1106b. This is not limited in this application.

S1107: The MMF module selects at least two target participants (including at least two target second nodes and corresponding functional modules of the target second nodes) based on the data distribution information respectively fed back by the plurality of DMF modules and by using an internal algorithm decision of the MMF module; in other words, selects participants that participate in a current model training process.

It may be understood that the identifier of the data class, the corresponding data information, and the like that are included in the data distribution information returned by the DMF module may be used as one of decision bases. The at least two target participants are selected depending on whether target service data required by the training task exists in service data locally stored in each DMF module, a data volume of a corresponding data subset, and the like. The at least two target participants may participate in the current model training process, to obtain a federated learning model corresponding to the target data class.

For the target data class, after the at least two target participants are selected, a local model training procedure includes:
S1108: The MMF module sends a model training message to any target MTF module.

The model training message includes an identifier of a target AI model, where the target AI model corresponds to the target data class; a model file of the target AI model; training data volume indication information; and the like. For detailed explanations, refer to S707. Details are not described herein again.

S1109: Each target MTF module sends a data query message to a corresponding target DMF module.

The data query message includes the identifier of the target data feature.

S1110: The target DMF module feeds back a data query acknowledgment message to the corresponding target MTF module.

The data query acknowledgment message includes the full dataset of service data that satisfies the target data feature.

S1111: Each target MTF module searches, based on the mapping relationship table, for an identifier of the target data class and the identifier of the target data analysis model that correspond to the identifier of the target data feature; identifies, analyzes, and classifies the full dataset based on the identifier of the target data analysis model by using the corresponding target data analysis model, to obtain a data subset of service data belonging to the target data class; and performs model training on the target AI model by using the obtained data subset, to obtain an updated AI model.

S1112: After model training is completed, any target MTF module sends a training complete notification message to the corresponding target MMF module, where the training complete notification message includes the identifier of the trained AI model, a model file of the updated AI model, and a data volume of a training dataset used for training the AI model.

S1113: After collecting training complete notification messages respectively returned by all the at least two target MTF modules that participate in the current round of model training, the MMF module aggregates, by using an aggregation algorithm (for example, a federated averaging algorithm), updated AI models returned by the target MTF modules, and updates parameters of the federated learning model.

For example, in the aggregation algorithm, the data volume of the training dataset used by each target MTF module for training the corresponding AI model may be used for determining a weight factor of the updated AI model obtained by the corresponding target MTF module through training. The weight factor is used for representing a weight of the corresponding AI model during aggregation processing.

S1114: The MMF module determines whether a training stop condition is satisfied. If the condition is not satisfied, S1103 to S1113 are repeated, to perform a next round of participant selection, model training, and model aggregation in an iterative manner, the current procedure, namely, the current model training process ends until the training stop condition is satisfied, that is, the training task for the target data class is completed, so that the federated learning model corresponding to the target data class is obtained.

Therefore, in the foregoing Embodiment 1 to Embodiment 5, based on the system architectures shown in FIG. 1, FIG. 3A and FIG. 3B, and FIG. 6A to FIG. 6C, the MMF module of the first node that serves as a coordinator may separately interact with the MTF module and the DMF module, of the second node, that serve as participants, so that the MMF module obtains data distribution information of a plurality of candidate participants, and further select at least two appropriate target participants based on the data distribution information fed back by the different candidate participants, so that the at least two appropriate target participants participate in the current round of model training process of the federated learning model for the target data class. In addition, in the local model training phase, the coordinator guides each target participant to select a data subset of a corresponding data class to perform local model training on an AI model of the corresponding data class, to obtain an updated AI model of the corresponding data class, so as to avoid data poisoning impact caused by different data distributions of different participants to a finally obtained model.

It should be noted that, in the foregoing embodiments, it is considered that the MEF module that is configured to implement a model evaluation function and the MTF module are located in a same entity. After the MTF module completes the local model training, in a model evaluation phase, the MEF module obtains a test dataset that belongs to the target data class, to perform model evaluation on the updated AI model that is obtained through training and that corresponds to the target data class, or perform model evaluation on the federated learning model that is delivered by the MMF module and that corresponds to the target data class. In the model evaluation phase, a manner in which the MEF module obtains the test dataset from the DMF module is basically the same as the process in which the MTF module obtains the training dataset in Embodiment 1 to Embodiment 5. For a detailed implementation process, refer to the foregoing related descriptions. It can be understood that, because the MEF module and the MTF module implement different functions, a name of a message exchanged between the MEF module and another module for obtaining the corresponding test dataset may be different from a name of a related message of the MTF module.

### Embodiment 6

In some embodiments, the MTF module and the MEF module may alternatively be separately deployed, that is, located in different entities. In this case, to facilitate implementation of the model evaluation function, the MEF module needs to interact with another module, to obtain an evaluation task and a test dataset required for completing the corresponding evaluation task. In this case, based on Embodiment 1 to Embodiment 5, a model evaluation task may be added in a model training process, to evaluate an obtained model. It may be understood that the evaluation task may be triggered by the MMF module based on a requirement, and the task may be delivered to the MEF module when required. This is not limited in this application.

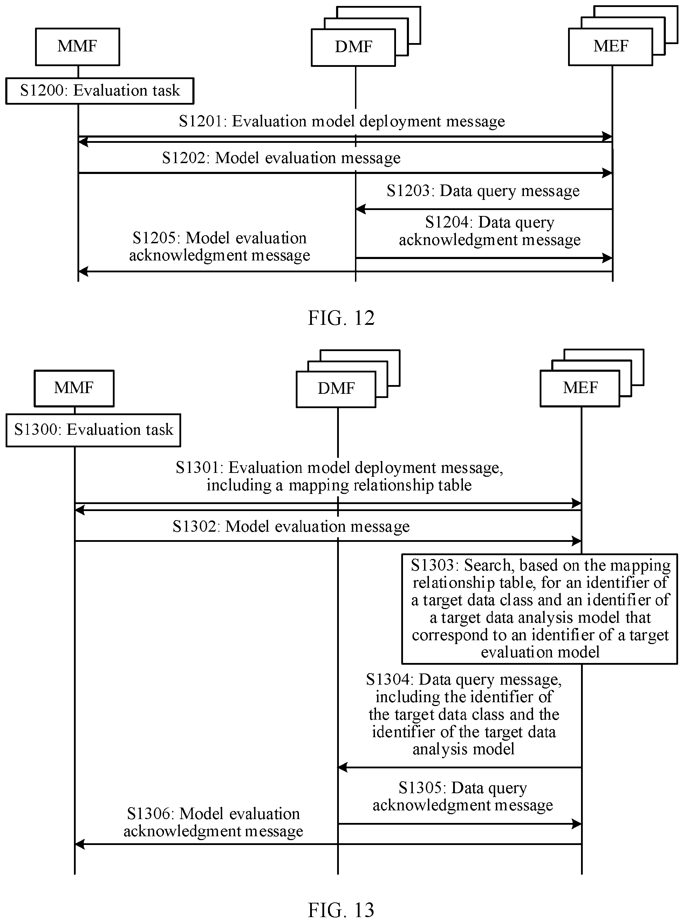

Refer to FIG. 12. When an evaluation task is triggered, steps of a federated learning method may include the following steps.

S1200: Trigger the evaluation task.

S1201: The MMF module sends an evaluation model deployment message to any target MEF module.

The evaluation model deployment message includes an identifier of a target evaluation model and a model file corresponding to the evaluation model. The target evaluation model may be a federated learning model corresponding to a corresponding target data class, or an updated AI model obtained after a target MTF module corresponding to the target MEF module performs model training.

S1202: The MMF module sends a model evaluation message to any target MEF module.

The model evaluation message includes the identifier of the target evaluation model, evaluation indicator information, an identifier of the target data class and an identifier of a target data analysis model that correspond to the target evaluation model.

S1203: The target MEF module sends a data query message to a corresponding target DMF module.

The data query message includes an identifier of a target data feature, a data type (type), the identifier of the target data class, training data volume indication information, the identifier of the target data analysis model, and the like.

The data type may include two types: training (train) and test (test), which are respectively used for obtaining a training dataset and a test dataset. In S1203, the data type is test (test), so as to obtain a test dataset.

S1204: The target DMF module sends a data query acknowledgment message to the corresponding target MEF module.

The data query acknowledgment message includes found target service data that satisfies the target data feature and that belongs to the target data class, namely, a data subset corresponding to the target data class, namely, the test dataset.

S1205: The target MEF module performs model evaluation on the target evaluation model by using the data subset that corresponds to the target data class and that is returned by the target DMF module, and sends a model evaluation acknowledgment message to the MMF module.

The model evaluation acknowledgment message includes an evaluation result, for example, precision, accuracy, and a prediction error of the target evaluation model.

In this way, the model evaluation message sent by the MMF module to the MEF module carries the identifier of the target data class and the identifier of the target data analysis model that correspond to the target evaluation model, so that the MEF module can obtain the correct test dataset required for the evaluation task, to evaluate the target evaluation model, so as to avoid inaccurate model evaluation.

### Embodiment 7

In an optional implementation, the MMF module may alternatively deliver the mapping relationship table mentioned in the foregoing embodiment to the MEF module. Further, a model evaluation message sent by the MMF module to the target MEF module may not specify an identifier of a target data class and an identifier of a target analysis model that are required for current model evaluation. The MEF module may request, from a corresponding DMF module by using the mapping relationship table and an identifier of a target evaluation model and based on the identifier of the target data class and the identifier of the target analysis model, to obtain a corresponding data subset (which is a test dataset), to evaluate the target evaluation model.

Refer to FIG. 13. When an evaluation task is triggered, steps of a federated learning method may include the following steps.

S1300: Trigger the evaluation task.

S1301: The MMF module sends an evaluation model deployment message to any target MEF module.

The evaluation model deployment message includes an identifier of a target evaluation model, a model file corresponding to the evaluation model, and a mapping relationship table. The target evaluation model may be a federated learning model corresponding to a corresponding target data class, or an updated AI model obtained after a target MTF module corresponding to the target MEF module performs model training.

S1302: The MMF module sends a model evaluation message to any target MEF module.

The model evaluation message includes the identifier of the target evaluation model and evaluation indicator information.

S1303: The target MEF module searches, based on the mapping relationship table, for an identifier of the target data class and an identifier of a target data analysis model that correspond to the identifier that is of the target evaluation model and that is included in the model evaluation message.

S1304: The target MEF module sends a data query message to a corresponding target DMF module.

The data query message includes an identifier of a target data feature, a data type (type), the identifier of the target data class, the identifier of the target data analysis model, and the like. The data type may include two types: training (train) and test (test), which are respectively used for obtaining a training dataset and a test dataset. In S1203, the data type is test (test), so as to obtain a test dataset.

S1305: The target DMF module sends a data query acknowledgment message to the corresponding target MEF module.

The data query acknowledgment message includes found target service data that satisfies the target data feature and that belongs to the target data class, namely, a data subset corresponding to the target data class, namely, the test dataset.

S1306: The target MEF module performs model evaluation on the target evaluation model by using the data subset that corresponds to the target data class and that is returned by the target DMF module, and sends a model evaluation acknowledgment message to the MMF module.

The model evaluation acknowledgment message includes an evaluation result, for example, precision, accuracy, and a prediction error of the target evaluation model.

### Embodiment 8

In an optional implementation, the MMF module may alternatively deliver the mapping relationship table mentioned in the foregoing embodiment to the DMF module. Further, in a model evaluation message sent by the MMF module to the target MEF module, an identifier of a target data class and an identifier of a target analysis model that are required for current model evaluation may not be specified. A data query message sent by the MEF module to the DMF module may include an identifier of a target evaluation model. In this way, the DMF module may search, based on the mapping relationship table, for an identifier of a target data class and an identifier of a target analysis model that correspond to the identifier of the target evaluation model, and feed back a found corresponding data subset (which is a test dataset) to a corresponding MEF module, to evaluate the target evaluation model.

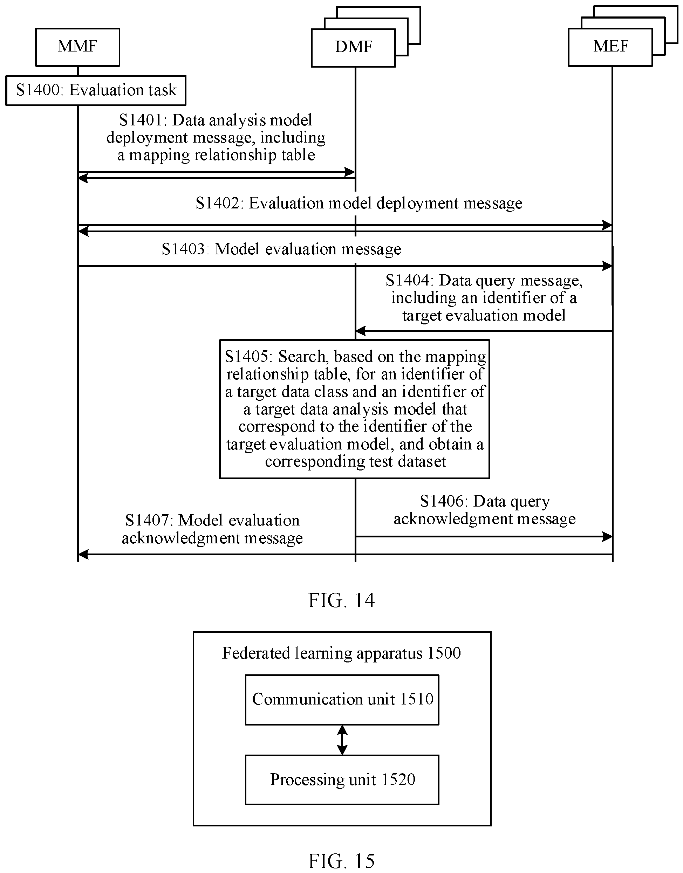

Refer to FIG. 14. When an evaluation task is triggered, steps of a federated learning method may include the following steps.

S1400: Trigger the evaluation task.

S1401: The MMF module sends a data analysis model deployment message to any target DMF module.

The data analysis model deployment message includes an identifier of a data analysis model, a model file of the data analysis model, and a mapping relationship table. It may be understood that, if the data analysis model has been deployed in the DMF module, only the mapping relationship table may be delivered in S1401. If the DMF module has stored the mapping relationship table, step S1401 may be omitted.

S1402: The MMF module sends an evaluation model deployment message to any target MEF module.

The evaluation model deployment message includes an identifier of a target evaluation model and a model file corresponding to the evaluation model. The target evaluation model may be a federated learning model corresponding to a corresponding target data class, or an updated AI model obtained after a target MTF module corresponding to the target MEF module performs model training.

S1403: The MMF module sends a model evaluation message to the target MEF module.

The model evaluation message includes the identifier of the target evaluation model and evaluation indicator information.

S1404: The target MEF module sends a data query message to a corresponding target DMF module.

The data query message includes an identifier of a target data feature, a data type (type), and the identifier of the target evaluation model. The data type may include two types: training (train) and test (test), which are respectively used for obtaining a training dataset and a test dataset. In S1203, the data type is test (test), so as to obtain a test dataset.

S1405: The target DMF module searches, based on the mapping relationship table, for an identifier of a target data class and an identifier of a target data analysis model that correspond to the identifier of the target evaluation model, and obtains a corresponding data subset based on the identifier of the target data class and the identifier of the target data analysis model, where the data subset is the test dataset.

S1406: The target DMF module sends a data query acknowledgment message to the corresponding target MEF module.

The data query acknowledgment message includes target service data that is found by the target DMF module, that satisfies the target data feature, and that belongs to the target data class, namely, a data subset corresponding to the target data class, namely, the test dataset.

S1407: The target MEF module performs model evaluation on the target evaluation model by using the data subset that corresponds to the target data class and that is returned by the target DMF module, and sends a model evaluation acknowledgment message to the MMF module.

The model evaluation acknowledgment message includes an evaluation result, for example, precision, accuracy, and a prediction error of the target evaluation model.

In this way, in Embodiment 6 to Embodiment 8, the first node serving as a coordinator may indicate, based on the evaluation task, MEF modules of at least two target second nodes to obtain the test dataset corresponding to the target data class, and evaluate the target evaluation model corresponding to the target data class, so as to avoid inaccurate evaluation of the target evaluation model corresponding to the target data class.

Till now, specific implementations of the federated learning solution in this application are described with reference to FIG. 7 to FIG. 14 and the embodiments.

In this solution, the first node serving as a coordinator may select, from a plurality of second nodes based on data distribution information of the plurality of second nodes, at least two target second nodes that store service data of a target data class, so that the at least two target second nodes participate in a model training process, so as to obtain a federated learning model of the corresponding target data class. In addition, in a process in which the first node coordinates the at least two target second nodes to train the federated learning model corresponding to the target data class, the first node may include related information in a related message sent to the target second node, to indicate each target second node to select target service data belonging to the target data class to train or evaluate a corresponding AI model, so as to obtain the federated learning model corresponding to the target data class. According to this solution, a data class to which service data that satisfies the target data feature belongs may be identified. Each data class corresponds to one data distribution. For each data class, corresponding service data is used for completing model training or model evaluation. Therefore, when each participant has a plurality of data distributions, corresponding federated learning models are obtained for the different data distributions, to avoid, as much as possible, poisoning impact caused by different data distributions of different participant nodes to the federated learning model, and ensure precision of the obtained federated learning model.

Based on a same technical concept, an embodiment of this application further provides a federated learning apparatus. Refer to FIG. 15. The federated learning apparatus 1500 may include a communication unit 1510 and a processing unit 1520. The communication unit 1510 and the processing unit 1520 may be configured to implement the foregoing embodiments or the method provided in the embodiments.

When the federated learning apparatus is implemented as the first node, the federated learning apparatus may be implemented as:
The communication unit 1510 is configured to obtain data distribution information of a plurality of second nodes based on a target data feature required by a training task, where data distribution information of any second node indicates a data class to which service data that is locally stored in the second node and that satisfies the target data feature belongs. The processing unit 1520 is configured to: select at least two target second nodes from the plurality of second nodes based on a target data class required by the training task and the data distribution information of the plurality of second nodes; and indicate the at least two target second nodes to perform federated learning, to obtain a federated learning model that is in the training task and that corresponds to the target data class, where any target second node locally stores target service data that satisfies the target data feature and that belongs to the target data class.

In an example, at least one data analysis model is deployed in each second node, and each data analysis model corresponds to one data feature group and identifies a data class of service data that satisfies the corresponding data feature group; and the communication unit 1510 is configured to: send a first query message to each of the plurality of second nodes based on the target data feature, where the first query message sent to any second node includes an identifier of the target data feature and an identifier of a target data analysis model, and the target data analysis model corresponds to the target data feature; and separately receive the corresponding data distribution information from the plurality of second nodes, where data distribution information of any second node indicates an identifier of at least one data class and data information of service data that is stored in the second node and that separately belongs to the at least one data class.

In an example, the first query message sent by the first node to any second node further includes an identifier of the target data class, and the data distribution information fed back by the second node includes the identifier of the target data class and data information of the target service data that is stored in the second node and that belongs to the target data class.

In an example, before the first node obtains the data distribution information of the plurality of second nodes based on the target data feature required by the training task, the communication unit 1510 is further configured to: send a data analysis model deployment message to each of the plurality of second nodes, where the data analysis model deployment message sent to any second node includes an identifier of the at least one data analysis model and a model file of the at least one data analysis model.

In an example, the processing unit 1520 is configured to: send a model training message to each of the at least two target second nodes, where the model training message sent to any target second node includes an identifier of a target artificial intelligence AI model, and the target AI model corresponds to the target data class; and obtain, based on updated AI models respectively received from the at least two target second nodes, the federated learning model that is in the training task and that corresponds to the target data class.

In an example, the model training message sent to any target second node further includes the identifier of the target data class and the identifier of the target data analysis model.

In an example, the communication unit 1510 is further configured to: send a model evaluation message to each of the at least two target second nodes, where the model evaluation message sent to any target second node includes an identifier and an evaluation indicator of a target evaluation model, and the target evaluation model corresponds to the target data class; and separately receive corresponding model evaluation results from the at least two target second nodes.

In an example, the model evaluation message sent to any target second node further includes the identifier of the target data class and the identifier of the target data analysis model.

In an example, the federated learning system is a wireless AI model-driven network system; the first node includes a model management function MMF module; and any second node includes a model training function MTF module, a data management function DMF module, and a model evaluation function MEF module, where the at least one data analysis model is deployed in the DMF module or the MTF module; and that the communication unit 1510 sends a first query message to each second node includes: A communication unit of the MMF module sends the first query message to the DMF module or the MTF module of each second node.

In an example, the communication unit 1510 is further configured to: send a mapping relationship table to each of the plurality of second nodes, where the mapping relationship table sent to any second node is used for recording a mapping relationship between an identifier of a data feature, an identifier of an AI model, an identifier of a data analysis model, and an identifier of a data class.

When the federated learning apparatus is implemented as the second node, the federated learning apparatus may implement:
The communication unit 1510 is configured to: receive a first query message from the first node, where the first query message indicates a target data feature required by a training task; and send data distribution information to the first node based on the target data feature, where the data distribution information indicates a data class to which service data that is locally stored in the second node and that satisfies the target data feature belongs. The processing unit 1520 is configured to train, as indicated by the first node and by using stored target service data that belongs to a target data class, a target artificial intelligence AI model corresponding to the target data class, to obtain an updated AI model, where the communication unit is further configured to send the updated AI model to the first node, so that the first node obtains a federated learning model that is in the training task and that corresponds to the target data class.

In an example, at least one data analysis model is deployed in the second node, and each data analysis model corresponds to one data feature group and identifies a data class of service data that satisfies the corresponding data feature group; and the first query message includes an identifier of the target data feature and an identifier of a target data analysis model, and the target data analysis model corresponds to the target data feature. The processing unit is configured to: identify, by using the target data analysis model, the data class of the stored service data that satisfies the target data feature, and obtain data information of service data that separately belongs to at least one data class. The communication unit is further configured to send the data distribution information to the first node, where the data distribution information indicates an identifier of the at least one data class and the data information of the service data that separately belongs to the at least one data class.

In an example, the first query message further includes an identifier of the target data class, and the data distribution information includes the identifier of the target data class and data information of the target service data that is stored in the second node and that belongs to the target data class.

In an example, the communication unit 1510 is further configured to: before the first node receives the first query message, receive a data analysis model deployment message from the first node, where the data analysis model deployment message includes an identifier of the at least one data analysis model and a model file of the at least one data analysis model.

In an example, the communication unit 1510 is configured to receive a model training message from the first node, where the model training message includes an identifier of the target AI model, and the target AI model corresponds to the target data class; and the processing unit is configured to: obtain, based on the identifier of the AI model, stored target service data that satisfies the target data feature and that belongs to the target data class; and train the AI model based on the target service data, to obtain the updated AI model.

In an example, the model training message further includes the identifier of the target data class and the identifier of the target data analysis model.

In an example, the communication unit 1510 is further configured to: receive a model evaluation message from the first node, and evaluate a target evaluation model by using the target service data, where the target evaluation model message includes an identifier and an evaluation indicator of the target evaluation model, and the target evaluation model corresponds to the target data class; and send a model evaluation result to the first node.

In an example, the model evaluation message further includes the identifier of the target data class and the identifier of the target data analysis model.

In an example, the federated learning system is a wireless AI model-driven network system; the first node includes a model management function MMF module; and any second node includes a model training function MTF module, a data management function DMF module, and a model evaluation function MEF module, where the at least one data analysis model is deployed in the DMF module or the MTF module; and that a communication unit receives a first query message from the first node includes: A communication unit of the DMF module or a communication unit of the MTF module receives the first query message from the MMF module.

In an example, when the DMF module and the MTF module are located in different entities, and the at least one data analysis model is deployed in the MTF module, after the communication unit of the DMF module receives the first query message from the MMF module, the communication unit of the DMF module is further configured to: send a data analysis message to the MTF module, where the data analysis message includes a full dataset that is stored in the DMF module and that satisfies the target data feature, the identifier of the target data class, and the identifier of the data analysis model; and the data analysis message indicates the MTF module to use the target data analysis model to identify a data class of the full dataset.

In an example, when the DMF module and the MTF module are located in different entities, and the at least one data analysis model is deployed in the DMF module, that the second node receives a model training message from the first node includes: The communication unit of the MTF module receives the model training message from the MMF module; and
after the communication unit of the MTF module receives the model training message from the MMF module, the communication unit of the MTF module is further configured to send a second query message to the DMF module, where the second query message indicates the DMF module to feed back a training dataset in the target service data to the MTF module, where the second query message includes: the identifier of the target data feature, the identifier of the target AI model, and first data type indication information; or the identifier of the target data feature, the identifier of the target data class, the identifier of the target data analysis model, and first data type indication information.

In an example, when the MEF module and the MTF module are located in different entities, the communication unit is configured to: receive the model evaluation message from the MMF module by using the communication unit of the MEF module; and after receiving the model evaluation message from the MMF module by using the communication unit of the MEF module, the communication unit of the MEF module is further configured to send a third query message to the DMF module, where the third query message indicates the DMF module to feed back a test dataset in the target service data to the MEF module, where the third query message includes: the identifier of the target data feature, the identifier of the target AI model, and second data type indication information; or the identifier of the target data feature, the identifier of the target data class, the identifier of the target data analysis model, and second data type indication information.

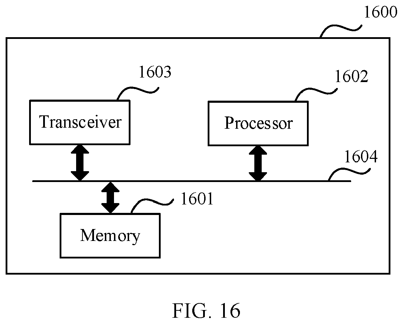

Based on a same technical concept, this application further provides a federated learning device. The federated learning device may be applied to the first node or the second node, to implement the foregoing embodiments and the methods provided in the embodiments. Refer to FIG. 16. The federated learning device 1600 includes a memory 1601, a processor 1602, and a transceiver 1603. The memory 1601, the processor 1602, and the transceiver 1603 are connected to each other.

Optionally, the memory 1601, the processor 1602, and the transceiver 1603 are connected to each other through a bus 1604. The memory 1601 is configured to store program code, and the processor 1602 may obtain the program code from the memory 1601 and perform corresponding processing. The bus 1604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 16, but this does not mean that there is only one bus or only one type of bus.

It may be understood that the memory 1601 is configured to store program instructions, data, and the like. Specifically, the program instructions may include program code. The program code includes computer operation instructions. The memory 1601 may include a random access memory (random access memory, RAM), or may include a non-volatile memory (non-volatile memory), for example, at least one magnetic disk memory. The processor 1602 executes the program instructions stored in the memory 1601, and implements the foregoing functions by using the data stored in the memory 1601, to implement the federated learning method provided in the foregoing embodiment.

It may be understood that the memory 1601 in FIG. 16 in this application may be a volatile memory or a non-volatile memory, or may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

Based on the foregoing embodiments, an embodiment of this application further provides a computer program. When the computer program runs on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any available medium that can be accessed by the computer. The following provides an example but does not impose a limitation: The computer-readable medium may include a RAM, a ROM, an EEPROM, a CD-ROM or another optical disc storage, or a disk storage medium or another disk storage device, or any other medium that can carry or store expected program code in a form of an instruction or a data structure and can be accessed by a computer

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions of a service device, a forwarding device, or a station device according to the foregoing embodiments. In a possible design, the chip system further includes a memory. The memory is configured to store a program and data that are necessary for the computer apparatus. The chip system may include a chip, or may include the chip and another discrete component.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used for implementing each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations provided that they fall within the scope of the claims of this application and their equivalent technologies.

## Claims

1. A federated learning method, applied to a federated learning system comprising a first node and a plurality of second nodes, wherein the method comprises:
obtaining, by the first node, data distribution information of the plurality of second nodes based on a target data feature required by a training task, wherein data distribution information of any second node indicates a data class to which service data that is locally stored in the second node and that satisfies the target data feature belongs;
selecting, by the first node, at least two target second nodes from the plurality of second nodes based on a target data class required by the training task and the data distribution information of the plurality of second nodes, wherein any target second node locally stores target service data that satisfies the target data feature and that belongs to the target data class; and
indicating, by the first node, the at least two target second nodes to perform federated learning, to obtain a federated learning model that is in the training task and that corresponds to the target data class.

2. The method according to claim 1, wherein at least one data analysis model is deployed in each second node, and each data analysis model corresponds to one data feature group and identifies a data class of service data that satisfies the corresponding data feature group; and
the obtaining, by the first node, data distribution information of the plurality of second nodes based on a target data feature required by a training task comprises:
sending, by the first node, a first query message to each of the plurality of second nodes based on the target data feature, wherein the first query message sent to any second node comprises an identifier of the target data feature and an identifier of a target data analysis model, and the target data analysis model corresponds to the target data feature; and
separately receiving, by the first node, the corresponding data distribution information from the plurality of second nodes, wherein data distribution information of any second node indicates an identifier of at least one data class and data information of service data that is stored in the second node and that separately belongs to the at least one data class.

3. The method according to claim 2, wherein the first query message sent by the first node to any second node further comprises an identifier of the target data class, and the data distribution information fed back by the second node comprises the identifier of the target data class and data information of the target service data that is stored in the second node and that belongs to the target data class.

4. The method according to claim 2 or 3, wherein before the obtaining, by the first node, data distribution information of the plurality of second nodes based on a target data feature required by a training task, the method further comprises:
sending, by the first node, a data analysis model deployment message to each of the plurality of second nodes, wherein the data analysis model deployment message sent to any second node comprises an identifier of the at least one data analysis model and a model file of the at least one data analysis model.

5. The method according to any one of claims 2 to 4, wherein the indicating, by the first node, the at least two target second nodes to perform federated learning, to obtain a federated learning model that is in the training task and that corresponds to the target data class comprises:
sending, by the first node, a model training message to each of the at least two target second nodes, wherein the model training message sent to any target second node comprises an identifier of a target artificial intelligence AI model, and the target AI model corresponds to the target data class; and
obtaining, by the first node based on updated AI models respectively received from the at least two target second nodes, the federated learning model that is in the training task and that corresponds to the target data class.

6. The method according to claim 5, wherein the model training message sent to any target second node further comprises the identifier of the target data class and the identifier of the target data analysis model.

7. The method according to claim 5, wherein the indicating, by the first node, the at least two target second nodes to perform federated learning, to obtain a federated learning model that is in the training task and that corresponds to the target data class further comprises:
sending, by the first node, a model evaluation message to each of the at least two target second nodes, wherein the model evaluation message sent to any target second node comprises an identifier and an evaluation indicator of a target evaluation model, and the target evaluation model corresponds to the target data class; and
separately receiving, by the first node, corresponding model evaluation results from the at least two target second nodes.

8. The method according to claim 7, wherein the model evaluation message sent to any target second node further comprises the identifier of the target data class and the identifier of the target data analysis model.

9. The method according to any one of claims 2 to 8, wherein the federated learning system is a wireless AI model-driven network system; the first node comprises a model management function MMF module; and any second node comprises a model training function MTF module, a data management function DMF module, and a model evaluation function MEF module, wherein
the at least one data analysis model is deployed in the DMF module or the MTF module; and
the sending, by the first node, a first query message to each second node comprises:
sending, by the MMF module, the first query message to the DMF module or the MTF module of each second node.

10. The method according to any one of claims 2 to 9, wherein the method further comprises:
sending, by the first node, a mapping relationship table to each of the plurality of second nodes, wherein the mapping relationship table sent to any second node is used for recording a mapping relationship between an identifier of a data feature, an identifier of an AI model, an identifier of a data analysis model, and an identifier of a data class.

11. A federated learning method, applied to any second node in a federated learning system comprising a first node and a plurality of second nodes, wherein the method comprises:
receiving, by the second node, a first query message from the first node, wherein the first query message indicates a target data feature required by a training task;
sending, by the second node, data distribution information to the first node based on the target data feature, wherein the data distribution information indicates a data class to which service data that is locally stored in the second node and that satisfies the target data feature belongs;
training, by the second node as indicated by the first node and by using stored target service data that belongs to a target data class, a target artificial intelligence AI model corresponding to the target data class, to obtain an updated AI model; and
sending, by the second node, the updated AI model to the first node, to enable the first node to obtain a federated learning model that is in the training task and that corresponds to the target data class.

12. The method according to claim 11, wherein at least one data analysis model is deployed in the second node, and each data analysis model corresponds to one data feature group and identifies a data class of service data that satisfies the corresponding data feature group; the first query message comprises an identifier of the target data feature and an identifier of a target data analysis model, and the target data analysis model corresponds to the target data feature; and the sending, by the second node, data distribution information to the first node based on the target data feature comprises:
identifying, by the second node by using the target data analysis model, the data class of the stored service data that satisfies the target data feature, and obtaining data information of service data that separately belongs to at least one data class; and
sending, by the second node, the data distribution information to the first node, wherein the data distribution information indicates an identifier of the at least one data class and the data information of the service data that separately belongs to the at least one data class.

13. The method according to claim 12, wherein the first query message further comprises an identifier of the target data class, and the data distribution information comprises the identifier of the target data class and data information of the target service data that is stored in the second node and that belongs to the target data class.

14. The method according to claim 12 or 13, wherein before the receiving, by the second node, a first query message from the first node, the method further comprises:
receiving, by the second node, a data analysis model deployment message from the first node, wherein the data analysis model deployment message comprises an identifier of the at least one data analysis model and a model file of the at least one data analysis model.

15. The method according to any one of claims 12 to 14, wherein the training, by the second node as indicated by the first node and by using stored target service data that belongs to a target data class, a target artificial intelligence AI model corresponding to the target data class, to obtain an updated AI model comprises:
receiving, by the second node, a model training message from the first node, wherein the model training message comprises an identifier of the target AI model, and the target AI model corresponds to the target data class;
obtaining, by the second node based on the identifier of the AI model, stored target service data that satisfies the target data feature and that belongs to the target data class; and
training, by the second node, the AI model based on the target service data, to obtain the updated AI model.

16. The method according to claim 15, wherein the model training message further comprises the identifier of the target data class and the identifier of the target data analysis model.

17. The method according to claim 15, wherein the method further comprises:
receiving, by the second node, a model evaluation message from the first node, and evaluating a target evaluation model by using the target service data, wherein the target evaluation model message comprises an identifier and an evaluation indicator of the target evaluation model, and the target evaluation model corresponds to the target data class; and
sending, by the second node, a model evaluation result to the first node.

18. The method according to claim 17, wherein the model evaluation message further comprises the identifier of the target data class and the identifier of the target data analysis model.

19. The method according to any one of claims 12 to 18, wherein the federated learning system is a wireless AI model-driven network system; the first node comprises a model management function MMF module; and any second node comprises a model training function MTF module, a data management function DMF module, and a model evaluation function MEF module, wherein
the at least one data analysis model is deployed in the DMF module or the MTF module; and
the receiving, by the second node, a first query message from the first node comprises:
receiving, by the DMF module or the MTF module, the first query message from the MMF module.

20. The method according to claim 19, wherein when the DMF module and the MTF module are located in different entities, and the at least one data analysis model is deployed in the MTF module, after the receiving, by the DMF module, the first query message from the MMF module, the method further comprises:
sending, by the DMF module, a data analysis message to the MTF module, wherein the data analysis message comprises a full dataset that is stored in the DMF module and that satisfies the target data feature, the identifier of the target data class, and the identifier of the data analysis model; and the data analysis message indicates the MTF module to use the target data analysis model to identify a data class of the full dataset.

21. The method according to claim 19, wherein when the DMF module and the MTF module are located in different entities, and the at least one data analysis model is deployed in the DMF module, the receiving, by the second node, a model training message from the first node comprises:
receiving, by the MTF module, the model training message from the MMF module; and
after the receiving, by the MTF module, the model training message from the MMF module, the method further comprises:
sending, by the MTF module, a second query message to the DMF module, wherein the second query message indicates the DMF module to feed back a training dataset in the target service data to the MTF module, wherein
the second query message comprises:
the identifier of the target data feature, the identifier of the target AI model, and first data type indication information; or
the identifier of the target data feature, the identifier of the target data class, the identifier of the target data analysis model, and first data type indication information.

22. The method according to claim 19, wherein after receiving, by the MEF module, the model evaluation message from the MMF module when the MEF module and the MTF module are located in different entities, the method further comprises:
sending, by the MEF module, a third query message to the DMF module, wherein the third query message indicates the DMF module to feed back a test dataset in the target service data to the MEF module, wherein
the third query message comprises:
the identifier of the target data feature, the identifier of the target AI model, and second data type indication information; or
the identifier of the target data feature, the identifier of the target data class, the identifier of the target data analysis model, and second data type indication information.

23. A federated learning apparatus, used in a federated learning system comprising a first node and a plurality of second nodes, wherein the apparatus comprises:
a communication unit, configured to obtain data distribution information of the plurality of second nodes based on a target data feature required by a training task, wherein data distribution information of any second node indicates a data class to which service data that is locally stored in the second node and that satisfies the target data feature belongs; and
a processing unit, configured to: select at least two target second nodes from the plurality of second nodes based on a target data class required by the training task and the data distribution information of the plurality of second nodes; and indicate the at least two target second nodes to perform federated learning, to obtain a federated learning model that is in the training task and that corresponds to the target data class, wherein any target second node locally stores target service data that satisfies the target data feature and that belongs to the target data class.

24. The apparatus according to claim 23, wherein at least one data analysis model is deployed in each second node, and each data analysis model corresponds to one data feature group and identifies a data class of service data that satisfies the corresponding data feature group; and the communication unit is configured to:
send a first query message to each of the plurality of second nodes based on the target data feature, wherein the first query message sent to any second node comprises an identifier of the target data feature and an identifier of a target data analysis model, and the target data analysis model corresponds to the target data feature; and
separately receive the corresponding data distribution information from the plurality of second nodes, wherein data distribution information of any second node indicates an identifier of at least one data class and data information of service data that is stored in the second node and that separately belongs to the at least one data class.

25. The apparatus according to claim 24, wherein the first query message sent by the first node to any second node further comprises an identifier of the target data class, and the data distribution information fed back by the second node comprises the identifier of the target data class and data information of the target service data that is stored in the second node and that belongs to the target data class.

26. The apparatus according to claim 24 or 25, wherein before the first node obtains the data distribution information of the plurality of second nodes based on the target data feature required by the training task, the communication unit is further configured to:
send a data analysis model deployment message to each of the plurality of second nodes, wherein the data analysis model deployment message sent to any second node comprises an identifier of the at least one data analysis model and a model file of the at least one data analysis model.

27. The apparatus according to any one of claims 24 to 26, wherein the processing unit is further configured to:
send a model training message to each of the at least two target second nodes, wherein the model training message sent to any target second node comprises an identifier of a target artificial intelligence AI model, and the target AI model corresponds to the target data class; and
obtain, based on updated AI models respectively received from the at least two target second nodes, the federated learning model that is in the training task and that corresponds to the target data class.

28. The apparatus according to claim 27, wherein the model training message sent to any target second node further comprises the identifier of the target data class and the identifier of the target data analysis model.

29. The apparatus according to claim 27, wherein the communication unit is further configured to:
send a model evaluation message to each of the at least two target second nodes, wherein the model evaluation message sent to any target second node comprises an identifier and an evaluation indicator of a target evaluation model, and the target evaluation model corresponds to the target data class; and
separately receive corresponding model evaluation results from the at least two target second nodes.

30. The apparatus according to claim 29, wherein the model evaluation message sent to any target second node further comprises the identifier of the target data class and the identifier of the target data analysis model.

31. The apparatus according to any one of claims 24 to 30, wherein the federated learning system is a wireless AI model-driven network system; the first node comprises a model management function MMF module; and any second node comprises a model training function MTF module, a data management function DMF module, and a model evaluation function MEF module, wherein
the at least one data analysis model is deployed in the DMF module or the MTF module; and
that the communication unit sends a first query message to each second node comprises:
a communication unit of the MMF module sends the first query message to the DMF module or the MTF module of each second node.

32. The apparatus according to any one of claims 24 to 31, wherein the communication unit is further configured to:
send a mapping relationship table to each of the plurality of second nodes, wherein the mapping relationship table sent to any second node is used for recording a mapping relationship between an identifier of a data feature, an identifier of an AI model, an identifier of a data analysis model, and an identifier of a data class.

33. A federated learning apparatus, used in any second node in a federated learning system comprising a first node and a plurality of second nodes, wherein the apparatus comprises:
a communication unit, configured to: receive a first query message from the first node, wherein the first query message indicates a target data feature required by a training task; and send data distribution information to the first node based on the target data feature, wherein the data distribution information indicates a data class to which service data that is locally stored in the second node and that satisfies the target data feature belongs; and
a processing unit, configured to train, as indicated by the first node and by using stored target service data that belongs to a target data class, a target artificial intelligence AI model corresponding to the target data class, to obtain an updated AI model, wherein
the communication unit is further configured to send the updated AI model to the first node, to enable the first node to obtain a federated learning model that is in the training task and that corresponds to the target data class.

34. The apparatus according to claim 33, wherein at least one data analysis model is deployed in the second node, and each data analysis model corresponds to one data feature group and identifies a data class of service data that satisfies the corresponding data feature group; the first query message comprises an identifier of the target data feature and an identifier of a target data analysis model, and the target data analysis model corresponds to the target data feature;
the processing unit is configured to: identify, by using the target data analysis model, the data class of the stored service data that satisfies the target data feature, and obtain data information of service data that separately belongs to at least one data class; and
the communication unit is further configured to send the data distribution information to the first node, wherein the data distribution information indicates an identifier of the at least one data class and the data information of the service data that separately belongs to the at least one data class.

35. The apparatus according to claim 34, wherein the first query message further comprises an identifier of the target data class, and the data distribution information comprises the identifier of the target data class and data information of the target service data that is stored in the second node and that belongs to the target data class.

36. The apparatus according to claim 34 or 35, wherein the communication unit is further configured to:
before the first node receives the first query message, receive a data analysis model deployment message from the first node, wherein the data analysis model deployment message comprises an identifier of the at least one data analysis model and a model file of the at least one data analysis model.

37. The apparatus according to any one of claims 34 to 36, wherein
the communication unit is configured to receive a model training message from the first node, wherein the model training message comprises an identifier of the target AI model, and the target AI model corresponds to the target data class; and
the processing unit is configured to: obtain, based on the identifier of the AI model, stored target service data that satisfies the target data feature and that belongs to the target data class; and train the AI model based on the target service data, to obtain the updated AI model.

38. The apparatus according to claim 37, wherein the model training message further comprises the identifier of the target data class and the identifier of the target data analysis model.

39. The apparatus according to claim 37, wherein the communication unit is further configured to:
receive a model evaluation message from the first node, and evaluate a target evaluation model by using the target service data, wherein the target evaluation model message comprises an identifier and an evaluation indicator of the target evaluation model, and the target evaluation model corresponds to the target data class; and
send a model evaluation result to the first node.

40. The apparatus according to claim 39, wherein the model evaluation message further comprises the identifier of the target data class and the identifier of the target data analysis model.

41. The apparatus according to any one of claims 33 to 40, wherein the federated learning system is a wireless AI model-driven network system; the first node comprises a model management function MMF module; and any second node comprises a model training function MTF module, a data management function DMF module, and a model evaluation function MEF module, wherein
the at least one data analysis model is deployed in the DMF module or the MTF module; and
that a communication unit receives a first query message from the first node comprises:
a communication unit of the DMF module or a communication unit of the MTF module receives the first query message from the MMF module.

42. The apparatus according to claim 41, wherein when the DMF module and the MTF module are located in different entities, and the at least one data analysis model is deployed in the MTF module, after the communication unit of the DMF module receives the first query message from the MMF module, the communication unit of the DMF module is further configured to: send a data analysis message to the MTF module, wherein the data analysis message comprises a full dataset that is stored in the DMF module and that satisfies the target data feature, the identifier of the target data class, and the identifier of the data analysis model; and the data analysis message indicates the MTF module to use the target data analysis model to identify a data class of the full dataset.

43. The apparatus according to claim 41, wherein when the DMF module and the MTF module are located in different entities, and the at least one data analysis model is deployed in the DMF module, that the second node receives a model training message from the first node comprises:
the communication unit of the MTF module receives the model training message from the MMF module; and
after the communication unit of the MTF module receives the model training message from the MMF module, the communication unit of the MTF module is further configured to send a second query message to the DMF module, wherein the second query message indicates the DMF module to feed back a training dataset in the target service data to the MTF module, wherein
the second query message comprises:
the identifier of the target data feature, the identifier of the target AI model, and first data type indication information; or
the identifier of the target data feature, the identifier of the target data class, the identifier of the target data analysis model, and first data type indication information.

44. The apparatus according to claim 41, wherein when the MEF module and the MTF module are located in different entities, the communication unit is configured to:
receive the model evaluation message from the MMF module by using the communication unit of the MEF module; and
after receiving the model evaluation message from the MMF module by using the communication unit of the MEF module, the communication unit of the MEF module is further configured to send a third query message to the DMF module, wherein the third query message indicates the DMF module to feed back a test dataset in the target service data to the MEF module, wherein
the third query message comprises:
the identifier of the target data feature, the identifier of the target AI model, and second data type indication information; or
the identifier of the target data feature, the identifier of the target data class, the identifier of the target data analysis model, and second data type indication information.

45. A federated learning system, comprising:
the federated learning apparatus according to any one of claims 23 to 32; and
the federated learning apparatus according to any one of claims 33 to 44.

46. A computer-readable storage medium, wherein the computer-readable storage medium stores a computer program; and when the computer program runs on a computer, the computer is enabled to perform the method according to any one of claims 1 to 10 or 11 to 22.

47. A computer program product, wherein when the computer program product runs on a computer, the computer is enabled to perform the method according to any one of claims 1 to 10 or 11 to 22.
